# EUROPEAN PATENT APPLICATION

(11) **EP 4 703 778 A1**
(43) Date of publication of application: **04.03.2026**
(21) Application number: 24797155.9
(22) Date of filing: 26.04.2024
(51) Int. Cl.: G02B 5/20, F21S 2/00, G02B 5/00, G02F 1/13357

(54) **WAVELENGTH CONVERSION SHEET, BACKLIGHT, AND LIQUID CRYSTAL DISPLAY DEVICE**

(30) Priority: 28.04.2023 JP 2023074995
(71) Applicant: Dai Nippon Printing Co., Ltd., Tokyo 162-8001 (JP)
(72) Inventor: SAKAMOTO Takeshi, Tokyo 162-8001 (JP); TAMURA Shuichi, Tokyo 162-8001 (JP); HAMADA Ren, Tokyo 162-8001 (JP); KIMURA Shota, Tokyo 162-8001 (JP); HARUKI Akihito, Tokyo 162-8001 (JP); MORIMOTO Taro, Tokyo 162-8001 (JP); ONO Yoshiyuki, Tokyo 162-8001 (JP); HARADA Ryutaro, Tokyo 162-8001 (JP)
(74) Representative: Beck Greener LLP
(86) International application number: PCT/JP2024/016358
(87) International publication number: WO 2024/225410

(57) **Abstract**

Provided is a wavelength conversion sheet having excellent close adhesion between a phosphor layer and a primer layer even after a long-term environment test. A wavelength conversion sheet, including: a phosphor layer including a phosphor; and a film for a wavelength conversion sheet provided on at least one surface side of the phosphor layer, wherein the film for a wavelength conversion sheet includes at least a base material layer and a primer layer laminated thereon, and the primer is in contact with the phosphor layer, the phosphor layer and the primer layer include an element X, and C_{PR}/C_{QD} satisfies 0.10 or less, where C_{QD} (atomic%) is an average value of proportions of the element X in the phosphor layer within a region from an interface between the primer layer and the phosphor layer to 400 nm in a thickness direction of the phosphor layer, obtained by X-ray photoelectron spectroscopy, and where C_{PR} (atomic%) is a proportion of the element X in the primer layer at any depth within a region between 20 nm or more and 40 nm or less from the interface in a thickness direction of the primer layer, obtained by X-ray photoelectron spectroscopy.

## Description

### Technical Field

The present disclosure relates to a wavelength conversion sheet, and a backlight and a liquid crystal display device including the wavelength conversion sheet.

### Background Art

With the development of a personal computer, the demand for a liquid crystal display device has been increasing. In addition, recently, the penetration rate of a home-use liquid crystal television has also been increasing, and a smartphone and a tablet terminal have also been becoming widespread. Thus the market for a liquid crystal display device is undergoing further expansion.

The liquid crystal display device generally has a color filter, a liquid crystal cell, and a backlight. The liquid crystal display device controls intensity of light with a shutter function of a liquid crystal layer in the liquid crystal cell, and displays color of each pixel as separated three primary colors R, G, and B with the color filter to display an image.

As a light source for the backlight of the liquid crystal display device, a cold-cathode tube has been conventionally used. The light source for the backlight, however, is replaced from the cold-cathode tube to an LED from the viewpoints of low power consumption and space reduction.

As the LED used as the light source for the backlight, a white LED in which a blue LED and an YAG-based yellow phosphor are combined is widely used. The white LED, which has broad spectrum distribution of the emission wavelength, is called pseudo-white LED.

Meanwhile, the development of a backlight using quantum dot technology has also been promoted in recent years. The quantum dot refers to a nanometer-sized fine particle of a semiconductor. The quantum dot can be adjusted over the entire visible region of the emission wavelength by the quantum confinement effect (quantum size effect), in which an electron or an exciton is confined in a nanometer-sized small crystal. The quantum dot can generate strong fluorescence in a narrow wavelength band, and thus the display device can be illuminated with light of the three primary colors having excellent color purity. Therefore, a backlight using a quantum dot can provide a display device having excellent color reproducibility.

The wavelength conversion sheet used for the backlight source of this display device has a structure which has a phosphor layer obtained by dispersing a nanometer-sized phosphor fine particle of a semiconductor in a resin layer, and a film formed on a surface of the phosphor layer in order to protect the phosphor layer, in combination with an LED light source. This film has a water vapor barrier property in order to suppress degradation of the phosphor layer. For example, in PTL 1, a wavelength conversion sheet obtained by laminating a barrier film on a phosphor layer containing a phosphor, and a backlight unit including the wavelength conversion sheet have been developed, wherein the barrier film is obtained by laminating a barrier layer on one surface of a predetermined polyethylene terephthalate film.

An attempt has been made to improve the close adhesion between the phosphor layer and the barrier film having the barrier layer in order to further suppress the invasion of the phosphor layer by water vapor, as PTL 2 and 3, for example.

### Citation List

### Patent Literature

PTL1: WO 2015/037733
PTL2: JP 2020-19141 A
PTL3: JP 2020-160212 A

### Summary of Invention

### Technical Problem

In the wavelength conversion sheet in PTL 2 and 3, a phosphor layer is in contact with and laminated on a primer layer located on the outermost surface of a barrier film. When the wavelength conversion sheet in PTL 2 and 3 is left under a high-temperature and high-humidity environment at 60°C and 90%RH for a long term (hereinafter, referred to as "long-term environment test"), peeling between the phosphor layer and the primer layer occurs. The occurrence of peeling causes oxygen and water vapor to invade inside the wavelength conversion sheet, resulting in degradation of the phosphor layer, which is problematic.

The present disclosure has been made in view of the above problem, and it is an object of the present disclosure to provide a wavelength conversion sheet having excellent close adhesion between the phosphor layer and the primer layer even after the long-term environment test, and a backlight and a liquid crystal display device having the wavelength conversion sheet.

### Solution to Problem

To solve the above problem, the present disclosure provides the following <1> to <14>.
<1> A wavelength conversion sheet, comprising: a phosphor layer comprising a phosphor; and a film for a wavelength conversion sheet provided on at least one surface side of the phosphor layer, wherein the film for a wavelength conversion sheet comprises at least a base material layer and a primer layer laminated thereon, and the primer layer is in contact with the phosphor layer, the phosphor layer and the primer layer comprise an element X, and C_{PR}/C_{QD} satisfies 0.10 or less, where C_{QD} (atomic%) is an average value of proportions of the element X in the phosphor layer within a region from an interface between the primer layer and the phosphor layer to 400 nm in a thickness direction of the phosphor layer, obtained by X-ray photoelectron spectroscopy, and where C_{PR} (atomic%) is a proportion of the element X in the primer layer at any depth within a region between 20 nm or more and 40 nm or less from the interface in a thickness direction of the primer layer, obtained by X-ray photoelectron spectroscopy.
<2> The wavelength conversion sheet according to <1>, wherein the element X is at least one selected from sulfur and phosphorus.
<3> The wavelength conversion sheet according to <1> or <2>, wherein the element X is sulfur.
<4> The wavelength conversion sheet according to any one of <1> to <3>, wherein a coefficient of variation of the proportions of the element X in the thickness direction of the primer layer obtained by X-ray photoelectron spectroscopy is 0.60 or more.
<5> The wavelength conversion sheet according to any one of <1> to <4>, wherein the primer layer comprises a polyurethane-based resin and a polyester resin.
<6> The wavelength conversion sheet according to <5>, wherein the polyurethane-based resin is a resin obtained by a reaction between a polyfunctional isocyanate having a (meth)acryl group and a hydroxyl group-containing compound.
<7> The wavelength conversion sheet according to <5> or <6>, wherein the polyurethane-based resin has a mole ratio of isocyanate groups to hydroxyl groups (NCO/OH ratio) of 1.1 or more.
<8> The wavelength conversion sheet according to any one of <5> to <7>, wherein the primer layer further comprises a phenol-based oxidation inhibitor.
<9> The wavelength conversion sheet according to any one of <1> to <8>, further comprising a barrier layer between the base material layer and the primer layer.
<10> The wavelength conversion sheet according to <9>, wherein the barrier layer comprises a first barrier layer and a second barrier layer, and the first barrier layer is an inorganic oxide layer.
<11> The wavelength conversion sheet according to <9> or <10>, wherein the base material layer comprises a first base material and a second base material, the barrier layer and the primer layer are formed on one surface of the first base material, and the second base material is adhered to the other surface of the first base material via an adhesion layer.
<12> The wavelength conversion sheet according to any one of <1> to <11>, further comprising a diffusion layer.
<13> A backlight comprising: at least one light source that emits primary light; an optical plate that is disposed adjacent to the light source and is for light guiding or diffusion; and a wavelength conversion sheet disposed on a light emission side of the optical plate, wherein the wavelength conversion sheet is the wavelength conversion sheet according to any one of <1> to <12>.
<14> A liquid crystal display device comprising: the backlight according to <13>; and a liquid crystal panel.

### Advantageous Effects of Invention

According to the present disclosure, it is possible to obtain a wavelength conversion sheet having excellent close adhesion to the phosphor layer and the primer layer even after the long-term environment test. Use of this wavelength conversion sheet can yield a backlight and a display device that hardly degrade the phosphor layer over time.

### Brief Description of Drawings

[Fig. 1] Fig. 1 is a cross-sectional view showing one embodiment of the wavelength conversion sheet of the present disclosure.
[Fig. 2] Fig. 2 is a cross-sectional view showing one embodiment of the backlight of the present disclosure.
[Fig. 3] Fig. 3 is a cross-sectional view showing another embodiment of the backlight of the present disclosure.

### Description of Embodiments

Hereinafter, embodiments of the present disclosure will be described.

### [Wavelength conversion sheet]

A wavelength conversion sheet of the present disclosure includes: a phosphor layer including a phosphor; and a film for a wavelength conversion sheet provided on at least one surface side of the phosphor layer, wherein the film for a wavelength conversion sheet includes at least a base material layer and a primer layer laminated thereon, and the primer is in contact with the phosphor layer, the phosphor layer and the primer layer comprise an element X, and C_{PR}/C_{QD} satisfies 0.10 or less, where C_{QD} (atomic%) is an average value of proportions of the element X in the phosphor layer within a region from an interface between the primer layer and the phosphor layer to 400 nm in a thickness direction of the phosphor layer, obtained by X-ray photoelectron spectroscopy, and where C_{PR} (atomic%) is a proportion of the element X in the primer layer at any depth within a region between 20 nm or more and 40 nm or less from the interface in a thickness direction of the primer layer, obtained by X-ray photoelectron spectroscopy.

### [Laminated configuration]

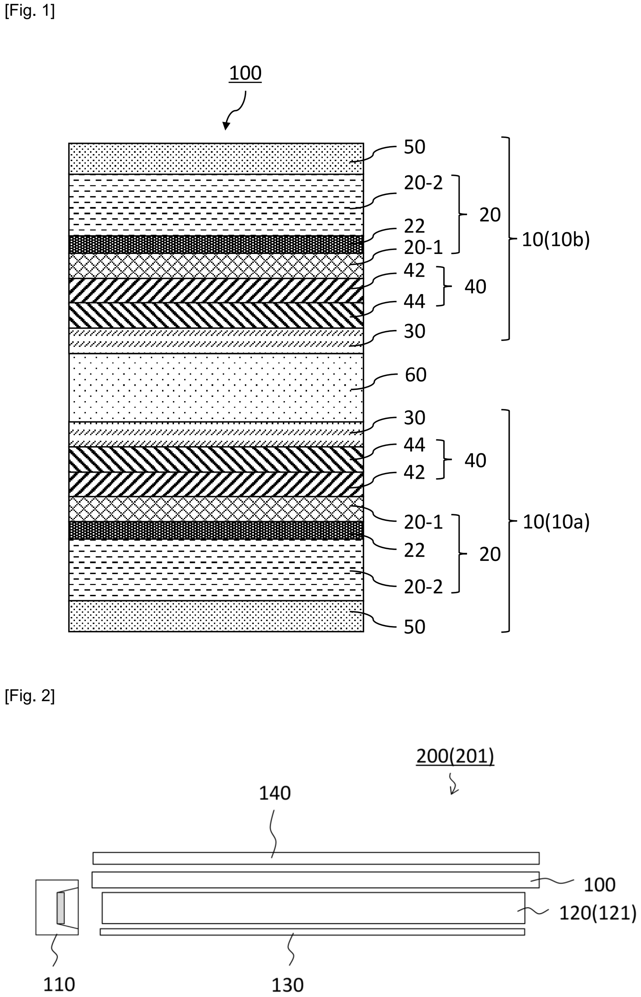

Fig. 1 is a cross-sectional schematic view schematically illustrating one embodiment of the wavelength conversion sheet of the present disclosure. A wavelength conversion sheet 100 in Fig. 1 is an example of a wavelength conversion sheet having films 10 (10a, 10b) for a wavelength conversion sheet on both surfaces of a phosphor layer 60.

The film 10 for a wavelength conversion sheet of the present disclosure has at least a primer layer 30 and a base material layer 20. The primer layer 30 is in contact with the phosphor layer 60. In the base material layer 20 in the example illustrated in Fig. 1, a first base material 20-1 and a second base material 20-2 are adhered via an adhesion layer 22.

The films 10a, 10b for a wavelength conversion sheet in Fig. 1 further have a barrier layer 40 between the primer layer 30 and the base material layer 20. In Fig. 1, the barrier layer 40 has a bilayer configuration of a first barrier layer 42 and a second barrier layer 44.

In addition, the films 10a, 10b for a wavelength conversion sheet in Fig. 1 further have a diffusion layer 50 on a surface of the base material layer 20 opposite to a surface on which the primer layer 30 is to be formed.

The configuration of the wavelength conversion sheet of the present disclosure is not limited to that in Fig. 1. The wavelength conversion sheet of the present disclosure may have, for example, the film for a wavelength conversion sheet having the laminated configuration illustrated in Fig. 1 on one surface side of the phosphor layer, and may have a film for a wavelength conversion sheet having a laminated configuration other than that in Fig. 1 on the other surface side. The laminated configuration of the film for a wavelength conversion sheet having another laminated configuration is not limited as long as the film for a wavelength conversion sheet satisfies the above requirement of the primer layer. Examples of the film for a wavelength conversion sheet having the laminated configuration other than that illustrated in Fig. 1 include films for a wavelength conversion sheet having the following laminated configuration. Note that each layer in the following examples has the same configuration as in Fig. 1 unless otherwise specified.
(1) A laminated configuration having the primer layer, the base material layer, and the diffusion layer in this order.
(2) A laminated configuration having the primer layer and the base material layer in this order.
(3) A laminated configuration having the primer layer, the barrier layer, the base material layer having a monolayer configuration, and the diffusion layer in this order.
(4) A laminated configuration having the primer layer, the barrier layer, and the base material layer having a monolayer configuration in this order.
(5) A laminated configuration having the primer layer, the barrier layer having a monolayer configuration, the base material layer, and the diffusion layer in this order.
(6) A laminated configuration having the primer layer, the barrier layer having a monolayer configuration, and the base material layer in this order.
(7) A laminated configuration having the primer layer, the second barrier layer, the first barrier layer, the second barrier layer, the first barrier layer, the base material layer, and the diffusion layer in this order.
(8) A laminated configuration having the primer layer, the second barrier layer, the first barrier layer, the second barrier layer, the first barrier layer, and the base material layer in this order.
(9) A laminated configuration having the primer layer, the base material layer having a monolayer configuration, the barrier layer, and the diffusion layer in this order.
(10) A laminated configuration having the primer layer, the base material layer having a monolayer configuration, and the barrier layer in this order.
(11) A laminated configuration having the primer layer, the base material layer, the barrier layer having a monolayer configuration, and the diffusion layer in this order.
(12) A laminated configuration having the primer layer, the base material layer, and the barrier layer having a monolayer configuration in this order.

In the wavelength conversion sheet of the present disclosure, the film for a wavelength conversion sheet of the present disclosure is provided on one surface side of the phosphor layer, and a film for a wavelength conversion sheet not satisfying the above requirement of the primer layer, namely a film other than the film for a wavelength conversion sheet of the present disclosure, may be provided on the other surface side of the phosphor layer. Note that it is preferable that the films for a wavelength conversion sheet of the present disclosure be laminated on both the surfaces of the phosphor layer in consideration of degradation of the phosphor layer.

### [Close adhesion]

As described later, the wavelength conversion sheet is produced by laminating the phosphor layer and the film for a wavelength conversion sheet so that the phosphor layer and the primer layer are in contact with each other. Thus, the wavelength conversion sheet is required to have not only good close adhesion between the primer layer and the phosphor layer before the long-term environment test (referred to as "initial close adhesion") but also good close adhesion after the long-term environment test (referred to as "temporal close adhesion").

As described later, the phosphor layer of the wavelength conversion sheet is formed by applying a resin composition to be a precursor of the phosphor layer on the surface of the primer layer of the film for a wavelength conversion sheet, and curing the resin composition. As a result of investigation by the present inventors, it has been found that a degree of permeation of a component of the phosphor layer into the primer layer by erosion of the primer layer with a solvent or the like in applying the precursor of the phosphor layer on the primer layer relates to the temporal close adhesion.

It is known that mixing of components in layers being in contact with each other tends to improve the interlayer close adhesion. Thus, it is expected that a sufficient amount of the component in the phosphor layer permeated into a deep region inside the primer layer improves both the initial close adhesion and the temporal close adhesion. However, the present inventors have found that more suppressed permeation of the component of the phosphor layer into the primer layer, namely a smaller amount of the component of the phosphor layer permeated into the primer layer in a region close to the interface between the primer layer and the phosphor layer, yields good temporal close adhesion.

The reason why the degree of permeation of the component of the phosphor layer into the primer layer relates to the temporal close adhesion is presumed as follows.

Applying of the resin composition to be the precursor of the phosphor layer on the surface of the primer layer erodes the outermost surface of the primer layer and diffuses the component to constitute the phosphor layer in the resin composition toward the inside of the primer layer. Thus, it is considered that a region where the component of the primer layer and the component permeated from the phosphor layer are dissolved (hereinafter, referred to as "dissolution region") is formed in the primer layer after the phosphor layer is formed by curing. When a large amount of the component of the phosphor layer is permeated into the primer layer, a concentration of the phosphor layer component contained in the primer layer increases in the vicinity of the interface. In addition, the component of the phosphor layer diffuses toward the inside of the primer layer to allow the component of the phosphor layer to be present at a high concentration even a location distanced from the interface. Accordingly, a large dissolution region containing the component of the phosphor layer at a high concentration is formed. In contrast, when a small amount of the component of the phosphor layer is permeated into the primer layer, the dissolution region is formed in the vicinity of the interface between the primer layer and the phosphor layer, but the concentration of the phosphor layer component in the dissolution region is also low.

From the viewpoint of the initial close adhesion, it is considered that the dissolution region is formed to improve the initial close adhesion regardless of the permeation state of the component of the phosphor layer. Meanwhile, the temporal close adhesion is considered to be derived from relaxation of strain generated in the phosphor layer. As described later, the phosphor layer is typically formed as thick as 10 µm or more and 200 µm or less. Thus, strain is generated inside the phosphor layer due to contraction by curing of the phosphor layer, swelling of the phosphor layer during the long-term environment test, and the like. When a small amount of the component of the phosphor layer is permeated into the primer layer, the dissolution region is formed in the vicinity of the interface but the amount of the component of the phosphor layer is small, and the other major region is a region containing no component of the phosphor layer or a region containing few amount of the component if contained. It is presumed that the above distribution of the component of the phosphor layer in the primer layer easily relaxes the strain of the phosphor layer by the primer layer to achieve the good close adhesion even after the long-term environment test. Meanwhile, when a large amount of the component of the phosphor layer is permeated into the primer layer to spread the component of the phosphor layer at a high concentration to the inside distanced from the interface, the dissolution region exhibits behavior similar to the phosphor layer, and thus, the primer layer hardly relaxes the strain due to the contraction and the swelling of the phosphor layer. As a result, it is presumed that peeling easily occurs with time at the interface between the primer layer and the phosphor layer due to the strain generated in the primer layer and the phosphor layer to deteriorate the temporal close adhesion.

### [As for element X]

The element X is an element contained in the component that is contained in the resin composition to be the precursor of the phosphor layer and that is not contained in the resin composition to be the precursor of the primer layer. The phosphor layer and the primer layer are contacted to allow the component containing the element X to be permeated from the phosphor layer into the primer layer and the element X to transfer into the primer layer. Therefore, when the wavelength conversion sheet is formed, both the phosphor layer and the primer layer contain the element X, and the element X in the primer layer is derived from the component transferred from the phosphor layer into the primer layer.

In the present disclosure, the element X is focused, and the degree of permeation of the component of the phosphor layer into the primer layer is indicated with a concentration of the element X in the primer layer as an indicator.

Specifically, the element X is at least one selected from sulfur and phosphorus. These elements are the component to constitute the phosphor layer. Among these, the element X is preferably sulfur. Sulfur is an element derived from a thiol compound in the phosphor layer. Phosphorus is an element derived from a phosphorus-based photopolymerization initiator in the phosphor layer.

### [As for distribution of element X]

The distribution of the element X in the primer layer and the phosphor layer in the thickness direction can be analyzed by X-ray photoelectron spectroscopy (hereinafter, simply referred to as "XPS").

An average value of proportions of the element X in the phosphor layer within a region from the interface between the primer layer and the phosphor layer to 400 nm in the thickness direction of the phosphor layer, obtained by the X-ray photoelectron spectroscopy, is defined as C_{QD} (atomic%). A proportion of the element X in the primer layer at any depth within a region between 20 nm or more and 40 nm or less from the interface in the thickness direction of the primer layer, obtained by the X-ray photoelectron spectroscopy, is defined as C_{PR} (atomic%). In the present disclosure, C_{PR}/C_{QD} is required to satisfy 0.10 or less.

The proportion C_{PR} of the element X in the primer layer and the proportion C_{QD} of the element X in the phosphor layer can be obtained by preparing the wavelength conversion sheet, then peeling the wavelength conversion sheet on the interface between the primer layer and the phosphor layer, and analyzing the element by XPS on the peeling surfaces of the primer layer and the phosphor layer in each of the thickness directions.

The elemental analysis by XPS can be performed by the following procedure, for example.

First, whether the peeling is performed on the interface of the phosphor layer and the primer layer is determined. This determination can be made by XPS analysis, but can also be made by another analysis method. Hereinafter, the determination method using XPS analysis will be described.

A survey spectrum is obtained on each of the peeling surfaces of the phosphor layer and the primer layer to identify elements contained in the measured surfaces. When the XPS analysis on the peeling surface detects an element (referred to as "element Z") that is contained in the resin composition to be the precursor of the primer layer and that is not contained in the resin composition to be the precursor of the phosphor layer on the peeling surface on the primer layer side but does not detect the element Z on the peeling surface on the phosphor layer side, it can be determined that the peeling is performed on the interface of the phosphor layer and the primer layer. For example, when the primer layer contains a polyurethane-based resin and the phosphor layer is composed of a resin containing no nitrogen, the element Z is nitrogen. The peeling surface on the primer layer side and the peeling surface on the phosphor layer side are regarded as the interface between the primer layer and the phosphor layer, and each of the peeling surfaces is defined as "0 nm in depth."

When it is determined that the peeling is performed on the interface between the phosphor layer and the primer layer, a narrow spectrum is used to calculate the proportion of each detected element (unit: atomic%).

After the XPS analysis is performed on the peeling surface of the primer layer, etching is performed from the peeling surface under a predetermined condition to expose a new measurement surface. The surface exposed after the etching is subjected to XPS analysis to calculate the proportion of each element. This procedure is repeated to obtain a depth profile of each element in the thickness direction of the primer layer.

After the XPS analysis is performed on the peeling surface of the phosphor layer, etching is performed from the peeling surface under a predetermined condition to expose a new measurement surface. The surface exposed after the etching is subjected to XPS analysis to calculate the proportion of each element. This procedure is repeated to obtain a depth profile of each element in the thickness direction of the phosphor layer.

Since the element X is the component to constitute the phosphor layer, the content of the element X in the phosphor layer is sufficiently higher than the amount of the element X transferred into the primer layer. In addition, even when a part of the element X is transferred into the primer layer, it can be said that the concentration of the element X is substantially constant in the entirety of the phosphor layer. Thus, C_{QD} in the present disclosure, which is defined as the average value of the proportions of the element X in the phosphor layer within the region from the interface (0 nm in depth) to 400 nm in depth in the thickness direction, can be regarded as an average value of the proportions of the element X in the entirety of the phosphor.

Since the etching amount varies depending on the etching condition, the material to be measured, and the like, it may be difficult to expose the measurement surface at 400 nm in depth to perform the XPS analysis even by adjusting the etching time. However, it can be said that the concentration of the element X is substantially constant in the entirety of the phosphor layer as noted above, and thus, if the measurement point cannot be obtained at 400 nm in depth, calculated is an average value of proportions of the element X from the interface (0 nm in depth) to a measurement point at less than 400 nm in depth and closest to 400 nm.

When the component in the phosphor layer is easily permeated into the primer layer, the component of the phosphor layer to be transferred into the primer layer is permeated at a large amount, which consequently increases the amount of the element X to be transferred into the primer layer. Thus, the proportion of the element X in the primer layer increases in the vicinity of the interface. In addition, the element X transferred into the primer layer diffuses toward the inside to increase the proportion of the element X even in the region distanced from the interface. Meanwhile, when the amount of the component in the phosphor layer to be permeated into the primer layer is small, the proportion of the element X in the primer layer in the vicinity of the interface is relatively low, and the element X is hardly detected in the region distanced from the interface. As above, the distribution of the element X in the primer layer detected by XPS varies depending on the degree of permeation of the component of the phosphor layer.

It is considered that the proportion of the element X detected in the primer layer varies depending on the concentration of the element X in the phosphor layer. Thus, C_{PR}/C_{QD} is used as the indicator that indicates the degree of permeation of the component in the phosphor layer into the primer layer. A lower value of C_{PR}/C_{QD} means that the permeation of the component of the phosphor layer into the primer layer is more suppressed.

As described later, the primer layer is preferably provided at a thickness within a range from 0.2 µm to 10 µm. The "region between 20 nm or more and 40 nm or less from the interface with the phosphor layer in the thickness direction" corresponds to a region inside the primer layer at a certain depth from the interface. As noted above, when the permeation of the component of the phosphor layer is sufficiently suppressed, a certain amount of the element X is detected in the vicinity of the interface with the primer layer, but the concentration of the element X tends to decrease toward the inside in the thickness direction. Thus, when the permeation of the component of the phosphor layer is sufficiently suppressed, C_{PR}/C_{QD} becomes low at a certain depth from the interface (within the region between 20 nm or more and 40 nm or less from the interface in the thickness direction of the primer layer). In contrast, when a large amount of the component of the phosphor layer is permeated into the primer layer, C_{PR}/C_{QD} becomes high even at a certain depth from the interface. It can be said that diffusion of a large amount of the component to constitute the phosphor layer into the primer layer is suppressed by C_{PR}/C_{QD} being 0.10 or less at any depth within the region between 20 nm or more and 40 nm or less from the interface with the phosphor layer in the thickness direction of the primer layer. In the present disclosure, C_{PR}/C_{QD} at any depth within the region between 20 nm or more and 40 nm or less from the interface with the phosphor layer in the thickness direction of the primer layer is preferably 0.08 or less, more preferably 0.06 or less, and further preferably 0.04.

As described above, it may be difficult to expose the measurement surface at a specific depth by etching to perform the XPS analysis. Accordingly, the present disclosure determines "any depth within the region between 20 nm or more and 40 nm or less from the interface in the thickness direction of the primer layer." The measurement surface at any depth between 20 nm or more and 40 nm or less in depth in the thickness direction can be exposed by regulating the etching condition, the etching time, and the like.

Some etching conditions and the like yield a plurality of the measurement points within the region between 20 nm or more and 40 nm or less from the interface in the thickness direction. In the present disclosure, when a plurality of the measurement points are obtained, C_{PR}/C_{QD} is required to be 0.10 or less at all the measurement points.

In the present disclosure, when a proportion of the element X in the primer layer at any depth within a region between 1 nm or more and less than 20 nm from the interface with the phosphor layer in the thickness direction of the primer layer, obtained by X-ray photoelectron spectroscopy, is defined as C_{PR-S} (atomic%), C_{PR-S}/C_{QD} is preferably 0.04 or more and 0.20 or less, more preferably 0.04 or more and 0.15 or less, and further preferably 0.04 or more and 0.10 or less. The region between 1 nm or more and less than 20 nm from the interface with the phosphor layer in the thickness direction of the primer layer refers to a region corresponding to the vicinity of the interface between the primer layer and the phosphor layer. C_{PR-S}/C_{QD} being 0.04 or more and 0.20 or less in the region in the vicinity of the interface means that the permeation of the component of the phosphor layer is tolerable but the permeation is suppressed as low as possible. C_{PR-S}/C_{QD} being within the above range in the region in the vicinity of the interface can improve both the initial close adhesion and the temporal close adhesion. Note that, when a plurality of the measurement points are obtained within this region, C_{PR-S}/C_{QD} preferably satisfies the above range at all the measurement points.

Note that the interface of the primer layer may have elemental distribution different from that in the inside when the depth profile is measured by XPS due to surface oxidation, adsorption of moisture, or the like. Thus, the interface (0 nm in depth) is excluded from "the region in the vicinity of the interface" in the present disclosure.

In the present disclosure, when a proportion of the element X in the primer layer at any depth within a region distanced at more than 40 nm from the interface with the phosphor layer in the thickness direction of the primer layer, obtained by X-ray photoelectron spectroscopy, is defined as C_{PR-I} (atomic%), C_{PR-I}/C_{QD} is preferably 0.10 or less, more preferably 0.05 or less, and further preferably 0.01 or less. Note that, when a plurality of the measurement points are obtained within this region, C_{PR-I}/C_{QD} preferably satisfies the above region at all the measurement points.

The above range being satisfied in the region distanced at more than 40 nm from the interface with the phosphor layer in the thickness direction of the primer layer means that permeation of the component of the phosphor layer into the deep region inside the primer layer is suppressed.

In the present disclosure, when C_{PR}/C_{QD} at any depth within the region between 20 nm or more and 40 nm or less from the interface in the thickness direction of the primer layer is 0.10 or less, C_{PR}/C_{PR-S} is preferably 0.60 or less. C_{PR}/C_{PR-S} corresponds to the proportion of the element within the region at a certain depth inside the primer layer from the interface relative to the proportion of the element X in the vicinal region of the interface. C_{PR}/C_{PR-S} satisfying the above range indicates uneven distribution of the element X in the primer layer. Therefore, C_{PR}/C_{PR-S} satisfying the above range means that the element X is not the element to constitute the component contained in the resin composition to be the precursor of the primer layer but the element derived from the component contained in the resin composition to be the precursor of the phosphor layer. C_{PR}/C_{PR-S} is preferably 0.55 or less, more preferably 0.50 or less, and further preferably 0.40 or less.

In the present disclosure, a coefficient of variation of the proportions of the element X in the thickness direction of the primer layer, obtained by X-ray photoelectron spectroscopy, is preferably 0.60 or more. This coefficient of variation is an indicator that indicates variation of the element X in the thickness direction of the primer layer. As noted above, it can be said that the concentration of the element X is substantially constant in the entirety of the phosphor layer. In this case, the coefficient of variation of the proportions of the element X in the thickness direction of the phosphor layer is a low value. When the permeation of the component in the phosphor layer into the primer layer is suppressed, the element X is detected in the primer layer in the vicinity of the interface, but the element X is hardly detected in the region distanced from the interface. In this case, the coefficient of variation of the proportions the element X in the thickness direction of the primer layer becomes high. Meanwhile, when a large amount of the component in the phosphor layer is permeated into the primer layer and this component diffuses also toward the inside of the primer layer, a difference between the proportion of the element X in the vicinity of the interface and the proportion of the element X in the region distanced from the interface tends to be small. In this case, the coefficient of variation of the proportions of the element X in the thickness direction of the primer layer becomes low. It can be said that the permeation of the component in the phosphor layer into the primer layer is suppressed by the coefficient of variation being 0.60 or more. The coefficient of variation is more preferably 0.75 or more, and further preferably 1.00 or more. An upper limit value of the coefficient of variation is preferably 5.00, and more preferably 4.00.

For calculating the coefficient of variation, the XPS analysis and the etching are repeated to obtain the depth profile of the element X so as to obtain the proportions of the element X at at least eight locations in the thickness direction of the primer layer. Then, the proportions of the element X at at least the eight positions are used to calculate the average value and the standard deviation, and the standard deviation is divided by the average value to obtain the coefficient of variation.

In the wavelength conversion sheet of the present disclosure, the reason why the permeation of the component of the phosphor layer into the primer layer is suppressed and C_{PR}/C_{QD} satisfies 0.10 or less at any depth within the region between 20 nm or more and 40 nm or less from the interface in the thickness direction of the primer layer is presumably due to a composite action caused by the following (1) to (3).

### (1) Component of resin to constitute primer layer

It is presumed that a higher glass transition point of the resin contained in the resin composition to be the precursor of the primer layer more suppresses the permeation of the component of the phosphor layer into the primer layer.

The primer layer in the present disclosure preferably contains a polyurethane-based resin and a polyester resin, as described later. Examples of means for raising the glass transition point of the resin to be the precursor of the primer layer include: a means of using a polyurethane-based resin having a high glass transition point; a means of using a polyester resin having a high glass transition point; and a means of using these means in combination. Among these, use of the polyester resin having a high glass transition point is preferable, and use in combination of the polyurethane-based resin having a high glass transition point and the polyester resin having a high glass transition point is more preferable.

The high glass transition point of the resin to constitute the primer layer tends to indicate a high molecular weight (weight-average molecular weight) of the resin and a high density. Thus, it is presumed that forming the primer layer from such a resin has an effect of inhibiting diffusion of the component of the phosphor layer. In addition, when the primer layer is formed from such a resin, it is also presumed that the primer layer hardly eroded by a solvent contained in the resin composition to be the precursor of the phosphor layer becomes the factor.

The glass transition point of the resin composition to be the precursor of the primer layer is preferably -20°C or higher, and more preferably 0°C or higher. The glass transition point of this resin composition is preferably 120°C or lower, and more preferably 100°C or lower. That is, the glass transition point of this resin composition is preferably -20°C or higher and 120°C or lower, and preferably 0°C or higher and 100°C or lower.

The glass transition point of the polyurethane-based resin is preferably -20°C or higher, and more preferably 0°C or higher. The glass transition point of the polyurethane-based resin is preferably 120°C or lower, and more preferably 100°C or lower. That is, the glass transition point of the polyurethane-based resin is preferably -20°C or higher and 120°C or lower, and preferably 0°C or higher and 100°C or lower.

The glass transition point of the polyester resin is preferably 0°C or higher, and more preferably 20°C or higher. The glass transition point of the polyester resin is preferably 150°C or lower, and more preferably 120°C or lower. That is, the glass transition point of the polyester resin is preferably 0°C or higher and 150°C or lower, and preferably 20°C or higher and 120°C or lower.

Note that the glass transition point is a midpoint glass transition temperature T_{mg} determined by performing differential thermal analysis (DTA) in accordance with JIS K 7121:1987, and making calculations by a method described in Item 9.3 (1) in JIS K 7121:1987 from the obtained DTA curve.

### (2) Silane coupling agent

The primer layer in the present disclosure preferably contains a silane coupling agent having a reactive group. Containing of the silane coupling agent increases the crosslinking density when the resin composition to be the precursor of the primer layer is cured to form the primer layer having a denser crosslinking structure, and thus, it is presumed that the permeation of the component of the phosphor layer is suppressed.

### (3) Solvent contained in precursor for forming phosphor layer

As described later, the phosphor layer is typically formed by applying the resin composition (the precursor) containing a phosphor and a sealing resin on the surface of the primer layer or laminating the film for a wavelength conversion sheet so that the surface of the primer layer is in contact with the applied resin composition, and then curing the resin composition. Into the resin composition for forming the phosphor layer, a solvent is added for purposes of regulating the viscosity, and the like. Some types of this solvent are considered to erode the surface region of the primer layer until the phosphor layer is cured, which causes the component of the phosphor layer to easily enter the inside of the primer layer. It is presumed that selecting a solvent that hardly erodes the component of the resin composition to constitute the primer layer can suppress the permeation of the component of the phosphor layer. For example, when the primer layer contains the polyurethane-based resin, a solvent having a hydrophilic group (for example, an alcoholic solvent such as isopropyl alcohol) tends to easily erode the surface region of the primer layer. Thus, a hydrophobic solvent (for example, methyl ethyl ketone, toluene, and ethyl acetate) is preferably used.

Each layer in the wavelength conversion sheet of the present disclosure will be specifically described below.

### [Primer layer]

The primer layer plays the role of ensuring good close adhesion to the phosphor layer when used for a wavelength conversion sheet to prevent the separation between the film for a wavelength conversion sheet and the phosphor layer even in a high temperature and high humidity environment and prevent degradation of the phosphor layer.

The primer layer may have a monolayer configuration or may be a configuration in which a plurality of primer layers are laminated, but particularly preferably has a monolayer configuration. Note that, when a plurality of primer layers are laminated, the primer layer in contact with the phosphor layer satisfies the above range of C_{PR}/C_{QD}.

In the present disclosure, the primer layer preferably contains the polyurethane-based resin and the polyester resin.

### <Polyurethane-based resin>

The primer layer containing the polyurethane-based resin easily relaxes strain generated due to swelling or contraction of the phosphor layer when forming the wavelength conversion sheet, and easily improves the initial close adhesion and the temporal close adhesion between the phosphor layer and the primer layer. In particular, use of the polyurethane-based resin that exhibits the glass transition point within the above range suppresses the permeation of the component of the phosphor layer into the primer layer to easily regulating C_{PR}/C_{QD} at any depth within the region between 20 nm or more and 40 nm or less from the interface in the thickness direction of the primer layer to be 0.10 or less, which is preferable.

When a urethane bond is detected by X-ray photoelectron spectroscopy (XPS), infrared spectroscopy (IR), nuclear magnetic resonance (NMR), gas chromatography-mass spectrometry (GCMS), or the like, it can be determined that the primer layer includes a polyurethane-based resin.

The polyurethane-based resin is a one-pack or two-pack type polyurethane-based resin obtained by a reaction between a polyfunctional isocyanate and a hydroxyl group-containing compound.

Only one of each of the polyfunctional isocyanate and the hydroxyl group-containing compound may be used, or a plurality of each thereof may be used.

Specific examples of the polyfunctional isocyanate include an aromatic polyisocyanate such as tolylene diisocyanate, diphenylmethane diisocyanate, xylylene diisocyanate, or polymethylene polyphenylene polyisocyanate, and an aliphatic polyisocyanate such as hexamethylene diisocyanate or isophorone diisocyanate. The polyfunctional isocyanate may be used as a modified derivative with an increased molecular weight, such as an adduct derivative, a biuret derivative, and an isocyanurate derivative, or may be used as a block derivative. The modified derivative and the block derivative may have a functional group such as a hydroxyl group, a carboxyl group, an epoxy group, an amino group, a mercapto group, a vinyl group, an acryloyl group, and a methacryloyl group. Among these, a (meth)acryl-group-containing polyisocyanate is preferably used. That is, the polyurethane-based resin of the present disclosure includes a polyurethane-based resin obtained by a reaction between a polyfunctional isocyanate having a (meth)acryl group and the hydroxyl group-containing compound.

Examples of the hydroxyl group-containing compound include a polyether polyol, a polyester polyol, a polyester polyurethane polyol, and a polyacrylate polyol. Among these, a polyester polyol is preferable.

The NCO/OH ratio in the polyurethane-based resin is preferably 1.1 or more, more preferably 1.2 or more, and further preferably 1.3 or more. The NCO/OH ratio of 1.1 or easily improves the initial close adhesion. Note that, when the NCO/OH ratio is high, the primer layer has tackiness. Thus, the NCO/OH ratio is preferably 4.0 or less, and more preferably 3.0 or less.

The molecular weight (weight-average molecular weight) of the polyurethane-based resin is preferably 1,000 or more, more preferably 2,000 or more, preferably 100,000 or less, and more preferably 80,000 or less. That is, the molecular weight (weight-average molecular weight) of the polyurethane-based resin is preferably 1,000 or more and 100,000 or less, and more preferably 2,000 or more and 80,000 or less.

The molecular weight of the polyurethane-based resin within the above range easily regulates C_{PR}/C_{QD} in any depth within the region between 20 nm or more and 40 nm or less from the interface in the thickness direction of the primer layer to be 0.10 or less.

### <Polyester resin>

The primer layer containing the polyester resin easily regulates C_{PR}/C_{QD} at any depth within the region between 20 nm or more and 40 nm or less from the interface in the thickness direction of the primer layer to be 0.10 or less, and can improve the initial close adhesion and the temporal close adhesion between the primer layer and the phosphor layer. In particular, the polyester resin that exhibits the glass transition point within the above range is preferably used. This polyester resin is a component other than the polyester to constitute the skeleton of the polyol component in the polyurethane resin.

The molecular weight (weight-average molecular weight) of this polyester resin is preferably 2,000 or more, more preferably 5,000 or more, preferably 700,000 or less, and more preferably 500,000 or less. That is, the molecular weight (weight-average molecular weight) of this polyester resin is preferably 2,000 or more and 700,000, and more preferably 5,000 or more and 500,000 or less.

The weight-average molecular weight herein is an average molecular weight measured by GPC analysis in terms of standard polystyrene.

The proportion of the polyester resin is preferably 5 parts by mass or more, and more preferably 20 parts by mass or more per 100 parts by mass of the polyurethane resin. The proportion of the polyester resin is preferably 60 parts by mass or less, and more preferably 40 parts by mass or less per 100 parts by mass of the polyurethane resin. That is, the proportion of the polyester resin is preferably 5 parts by mass or more and 60 parts by mass or less, more preferably 10 parts by mass or more and 50 parts by mass or less, and further preferably 20 parts by mass or more and 40 parts by mass or less, per 100 parts by mass of the polyurethane resin. The proportion of the polyester resin within the above range suppresses the permeation of the component from the phosphor layer to easily regulate C_{RP}/C_{QD} at any depth within the region between 20 nm or more and 40 nm or less from the interface in the thickness direction of the primer layer to be 0.10 or less, and can improve the initial close adhesion and the temporal close adhesion between the primer layer and the phosphor layer.

### <Phenol-based oxidation inhibitor>

In the present disclosure, the primer layer preferably further contains a phenol-based oxidation inhibitor. The primer layer containing the phenol-based oxidation inhibitor may more improve the temporal close adhesion.

Specific examples of the phenol-based oxidation inhibitor include dibutylhydroxytoluene (BHT), butylhydroxyanisole (BHA), 2,2'-methylenebis(4-methyl-6-t-butylphenol), 4,4'-butylidenebis(3-methyl-6-t-butylphenol), and 4,4'-thiobis(6-tertiary-butyl-3-methylphenol).

### <Silane coupling agent>

In the present disclosure, the primer layer preferably further contains a silane coupling agent. In the silane coupling agent, a functional group present at one end of the molecule thereof, usually a chloro, alkoxy, acetoxy group or the like, is hydrolyzed to form a silanol group (Si-OH), whereby the resin composition of the primer layer is modified by a covalent bond or the like to form a strong bond. Therefore, blending the silane coupling agent in the resin composition of the primer layer is considered to increase the crosslinking density to suppress the permeation of the component from the phosphor layer. In addition, in the configuration of providing the barrier layer, close adhesion between the primer layer and the barrier layer (specifically, the coating layer) can be improved.

In the present disclosure, a silane coupling agent having a reactive group is preferably used in order to increase close adhesion between the primer layer and the phosphor layer and close adhesion between the barrier layer and the primer layer. Examples of the reactive group include a vinyl group, a (meth)acryloyl group, an amino group, an epoxy group, and a mercapto group. In particular, a silane coupling agent having a (meth)acryloyl group is preferably used. It is considered that use of the silane coupling agent having a (meth)acryloyl group can further increase the crosslinking density to suppress the permeation of the component from the phosphor layer, and easily regulates C_{PR}/C_{QD} at any depth within the region between 20 nm or more and 40 nm or less from the interface in the thickness direction of the primer layer to 0.10 or less.

As the silane coupling agent, an organofunctional silane monomer having binary reactivity can be used. For example, one or more types of an aqueous solution or the like of y-chloropropyltrimethoxysilane, vinyltrichlorosilane, vinyltriethoxysilane, vinyl-tris(β-methoxyethoxy)silane, 3-methacryloxypropyltrimethoxysilane, 3-methacryloxypropylmethyldimethoxysilane, 3-methacryloxypropylmethyldiethoxysilane, 3-methacryloxypropyltriethoxysilane, β-(3,4-epoxycyclohexyl)ethyltrimethoxysilane, γ-glycidoxypropyltrimethoxysilane, vinyltriacetoxysilane, γ-mercaptopropyltrimethoxysilane, N-β(aminoethyl)- γ-aminopropyltrimethoxysilane, N-β(aminoethyl)- γ-aminopropylmethyldimethoxysilane, γ-ureidopropyltriethoxysilane, bis(β-hydroxyethyl)- γ-aminopropyltriethoxysilane, or γ-aminopropylsilicone can be used. Among these, 3-methacryloxypropyltrimethoxysilane, 3-methacryloxypropylmethyldimethoxysilane, 3-methacryloxypropylmethyldiethoxysilane, and 3-methacryloxypropyltriethoxysilane are preferable.

The silane coupling agent is contained in an amount of preferably 1% by mass or more, and more preferably 2% by mass or more, based on the total amount of the primer layer. When the content of the silane coupling agent is within the above range, the initial close adhesion between the primer layer and the phosphor layer and the close adhesion between the barrier layer and the primer layer can be further improved. In addition, the good close adhesion between the primer layer and the phosphor layer can be retained over time. In view of improving the extensibility of the primer layer and suppressing the occurrence of a crack in the primer layer, the silane coupling agent is contained in an amount of preferably 30% by mass or less, and more preferably 20% by mass or less, based on the total amount of the primer layer.

In the present disclosure, the surface of the primer layer (interface with the phosphor layer) may further be subjected to a surface treatment such as corona discharge treatment, ozone treatment, low temperature plasma treatment using oxygen gas, nitrogen gas, or the like, glow discharge treatment, or oxidation treatment using a chemical or the like, after the primer layer is formed.

In the present disclosure, the primer layer may further include a filler. The filler has the role of adjusting the viscosity or the like of a coating liquid for primer layer formation to improve the coating suitability or the like. As the filler, for example, powders such as calcium carbonate, barium sulfate, alumina white, silica, talc, a glass frit, or a resin powder can be used.

The primer layer may further include an additive such as a stabilizer, a crosslinking agent, a lubricant, or an ultraviolet absorber, as necessary.

The thickness of the primer layer is not particularly limited, but preferably 0.07 µm or more, more preferably 0.10 µm or more, further preferably 0.15 µm or more, and particularly preferably 0.20 µm or more. When the primer layer is too thick, handleability and productivity decrease. Thus, the thickness of the primer layer is preferably 10 µm or less, more preferably 7 µm or less, further preferably 5 µm or less, and particularly preferably 3 µm or less.

The primer layer according to the present embodiment preferably has a high total light transmittance measured according to JIS K 7361-1:1997, in view of efficiently converting light from a light source. Specifically, the primer layer according to the present embodiment has a total light transmittance of preferably 85% or more, and more preferably 90% or more, as measured according to JIS K 7361-1:1997, when the primer layer is formed on a PET film (film thickness: 12 µm).

### [Base material layer]

The base material layer mainly plays the role of a support for the primer layer. The base material layer is preferably one having a high light-transmitting property. Specifically, the base material layer has a total light transmittance of preferably 85% or more, more preferably 90% or more, as measured according to JIS K 7361-1:1997.

The material of the base material layer is not particularly limited as long as it is a resin film that does not impair the function of the wavelength conversion sheet. Examples of the base material layer include a resin such as polyimide (PI), polyethylene naphthalate (PEN), polyethylene terephthalate (PET), polyethylene butyrate (PBT), polypropylene (PP), nylon resin, an amorphous polyarylate, polysulfone, polyethersulfone, polyetherimide, fluororesin, or a liquid crystal polymer. To obtain transparency, heat resistance, and the like, polyethylene naphthalate (PEN) or polyethylene terephthalate (PET) is preferably used as the base material layer. To obtain the aforementioned oxygen transmission rate and water vapor transmission rate, polyethylene terephthalate (PET), polyethylene naphthalate (PEN), polypropylene (PP), or nylon resin is preferably used as the base material layer.

The base material layer may be a resin film consisting of a single layer, or a plurality of resin films adhered via an adhesion layer. In the example illustrated in Fig. 1, a base material layer 20 has a configuration in which a first base material 20-1 and a second base material 20-2 are laminated. In this case, the first base material 20-1 serves as a support for forming the primer layer 30. The second base material 20-2 plays the role of increasing the thickness of the entire base material layer 20 to impart rigidity to the film 10 for a wavelength conversion sheet.

The thickness of the entire base material layer is not particularly limited, and is preferably 8 µm or more and 200 µm or less, and more preferably 8 µm or more and 150 µm or less. When the film for a wavelength conversion sheet is produced by a winding method, the thickness of an entirety of the base material layer is preferably 125 µm or less. On the other hand, increasing the thickness of the entirety of the base material layer allows the base material layer to yield the gas barrier property against oxygen and water vapor. In this case, the barrier layer may be omitted. To achieve the required gas barrier property by the base material layer without providing the barrier layer, the thickness of the entirety of the base material layer is preferably 50 µm or more, and more preferably 75 µm or more.

When the base material layer is composed of a plurality of resin films, the thickness of the first base material serving as a support for the primer layer is preferably 8 µm or more and 50 µm or less, more preferably 8 µm or more and 25 µm or less, and further preferably 8 µm or more and 20 µm or less. When the first base material has the above thickness, the handleability is good when the primer layer is produced by the winding method. The thickness of the second base material is preferably 8 µm or more and 150 µm or less, and more preferably 8 µm or more and 100 µm or less. When the second base material has the above thickness, it is possible to impart appropriate rigidity to the film for a wavelength conversion sheet. Further, when the film for a wavelength conversion sheet is produced by the winding method, the handleability is good. When the gas barrier property is achieved by the base material layer as above, the thickness of the second base material is preferably 40 µm or more, and more preferably 50 µm or more.

The adhesive constituting the adhesion layer 22 is not particularly limited as long as it satisfies the good adhesiveness between the base material layers and the optical performance required for the wavelength conversion sheet. Examples of the adhesive that can be used include a polyvinyl acetate-based adhesive, a polyacrylic acid ester-based adhesive made of, for example, a homopolymer of an ethyl acrylate, butyl acrylate, 2-ethylhexyl acrylate or the like, or a copolymer of any of these with methyl methacrylate, acrylonitrile, styrene, or the like, a cyano acrylate-based adhesive, an ethylene copolymer-based adhesive made of, for example, a copolymer of ethylene with a monomer such as vinyl acetate, ethyl acrylate, acrylic acid, methacrylic acid, or the like, a cellulose-based adhesive, a polyester-based adhesive, a polyamide-based adhesive, a polyimide-based adhesive, an amino resin-based adhesive made of a urea resin, a melamine resin, or the like, a phenol resin-based adhesive, an epoxy-based adhesive, a polyurethane-based adhesive, a reactive (meth)acrylic-based adhesive, a rubber-based adhesive made of chloroprene rubber, nitrile rubber, styrenebutadiene rubber, or the like, a silicone-based adhesive, and an inorganic adhesive made of an alkali metal silicate, a low melting point glass, or the like. The composition system of the adhesive constituting the adhesive layer may be any composition form of an aqueous type, a solution type, an emulsion type, a dispersion type, and the like, and the form thereof may be any form of a film form, a sheet form, a powder form, a solid form, and the like, and further, the adhesion mechanism may be any form of a chemical reaction type, a solvent volatilization type, a hot-melt type, a hot-press type, and the like.

Instead of the above adhesive, an adhesion layer may be formed, for example, using a thermosetting resin or a resin obtained by containing a crosslinking agent or the like in a thermoplastic resin. Alternatively, the adhesion layer may be formed by extruding a thermoplastic resin such as EVA, an ionomer, polyvinyl butyral (PVB), or a polyethylene-based resin between base materials by extrusion lamination.

A desired surface treatment may be applied in advance to the surface of the side of the base material layer where the primer layer is to be provided, in order to improve the close adhesion to the primer layer or the barrier layer, or the like. Examples of the surface treatment include corona discharge treatment, ozone treatment, low temperature plasma treatment using oxygen gas, nitrogen gas, or the like, glow discharge treatment, and oxidation treatment using a chemical or the like.

As a method for improving the close adhesion to the primer layer or the barrier layer, an underlying layer such as an anchor coating agent layer or an adhesive layer may be formed in advance.

As the underlying layer, a resin composition containing a polyester-based resin, a polyamide-based resin, a polyurethane-based resin, an epoxy-based resin, a phenol-based resin, a (meth)acrylic-based resin, a polyvinyl acetate-based resin, a polyolefin-based resin such as polyethylene or polypropylene or a copolymer or a modified resin thereof, a cellulose-based resin, or the like as the main component of the vehicle can be used.

### [Barrier layer]

The barrier layer is a layer that imparts a gas barrier property to the film for a wavelength conversion sheet. The barrier layer is a layer optionally provided according to the gas barrier property required for the film for a wavelength conversion sheet. The barrier layer may be provided on an opposite side to the primer layer of the base material layer, or may be provided between the base material layer and the primer layer. To prevent damage of the barrier layer during a manufacturing process of the film for a wavelength conversion sheet and a manufacturing process of the wavelength conversion sheet, or to inhibit degradation of the phosphor layer from the sheet edge when used for the wavelength conversion sheet, the barrier layer is preferably provided between the base material layer and the primer layer.

Examples of a layer to configure the barrier layer include "an inorganic oxide layer formed by vapor-depositing an inorganic oxide," "an inorganic oxide layer formed by a sol-gel method," "a coating layer formed by applying a coating agent containing an organic component such as a water-soluble polymer," "a coating layer formed by applying a coating agent containing an inorganic oxide component and an organic component such as a water-soluble polymer," and "a layer containing a reaction product of a composition containing a metal oxide and a phosphorus compound (hereinafter, referred to as "metal-phosphoric acid reaction product layer")."

In the example illustrated in Fig. 1, a barrier layer 40 is configured by laminating a first barrier layer 42 and a second barrier layer 44. In the example illustrated in Fig. 1, the first barrier layer 42 is located on the base material layer 20 side. The second barrier layer 44 is in contact with the primer layer 30.

The barrier layer of the present disclosure is not limited to the laminated configuration in Fig. 1. Examples of the configuration of the barrier layer in the present disclosure include a monolayer configuration of a single type selected from the group consisting of the above layers to constitute the barrier layer, a configuration in which a plurality of the single types selected from the above group are laminated, and a configuration in which two or more types selected from the above group are alternately laminated (namely, a configuration containing at least the first barrier layer and the second barrier layer).

Examples of the configuration in which the barrier layer contains the first barrier layer and the second barrier layer include: the bilayer configuration exemplified in Fig. 1; a configuration in which the first barrier layer, the second barrier layer, and a third barrier layer are laminated in this order from the base material layer side; and a configuration in which the first barrier layer, the second barrier layer, a third barrier layer, and a fourth barrier layer are laminated in this order from the base material layer side. In these cases, layers adjacent to each other are of different materials.

When the barrier layer contains the first barrier layer and the second barrier layer, the first barrier layer is preferably the inorganic oxide layer. The second barrier layer is preferably the above coating layer.

When the barrier layer contains the first barrier layer, the second barrier layer, and the third barrier layer, the first barrier layer located on the base material layer 20 side is preferably the inorganic oxide layer. The second barrier layer is preferably the coating layer. The third barrier layer is preferably the inorganic oxide layer or the coating layer. When the third barrier layer is the coating layer, the coating layer is of a material different from the coating layer of the second barrier layer. The third barrier layer is preferably the inorganic oxide layer in consideration of the barrier property, damage of the barrier layer, and the like.

When the barrier layer contains the first barrier layer, the second barrier layer, the third barrier layer, and the fourth barrier layer, the first barrier layer located on the base material layer 20 side is preferably the inorganic oxide layer. The second barrier layer is preferably the coating layer. Each of the third barrier layer and the fourth barrier layer is preferably one selected from the inorganic oxide layer and the coating layer. Note that layers of the third barrier layer and the fourth barrier layer adjacent to each other are of different materials. The third barrier layer is preferably the inorganic oxide layer and the fourth barrier layer is preferably the coating layer in consideration of the barrier property, damage of the barrier layer, and the like.

### <Inorganic oxide layer>

Examples of the inorganic oxide layer include a layer made of aluminum oxide, silicon oxide, magnesium oxide, or a mixture thereof. The inorganic oxide layer is preferably a thin film layer containing aluminum oxide or silicon oxide as a main component, in view of a gas barrier property, transparency, productivity, or the like.

Examples of the method for forming the inorganic oxide layer include a forming method by vapor-depositing an inorganic oxide and a forming method by a sol-gel method. Examples of the method for forming a vapor-deposited film include a physical vapor deposition method (PVD method) such as a vacuum vapor deposition method, a sputtering method, and an ion plating method, or a chemical vapor deposition method (CVD method) such as a plasma chemical vapor deposition method, a thermochemical vapor deposition method, and a photochemical vapor deposition method.

The thickness of the inorganic oxide layer is not particularly limited, and is preferably 5 nm or more and 500 nm or less. When the thickness of the inorganic oxide layer is 5 nm or more, the inorganic oxide layer becomes uniform, and a sufficient gas barrier property can be imparted to the film for a wavelength conversion sheet. The thickness of the inorganic oxide layer is more preferably 8 nm or more and further preferably 10 nm or more, in consideration of the gas barrier property. When the thickness of the inorganic oxide layer is 500 nm or less, sufficient flexibility can be imparted to the inorganic oxide layer, and it is possible to reduce the occurrence of a scratch and a crack in each inorganic oxide layer. The thickness of the inorganic oxide layer is more preferably 100 nm or less, further preferably 50 nm or less, and particularly preferably 20 nm or less, in consideration of transparency, productivity, and the like. When a plurality of inorganic oxide layers are provided, the thickness of each inorganic oxide layer is preferably in the above thickness range.

### <Coating layer>

The coating layer is a layer that prevents various types of secondary damage in a subsequent step and that imparts a high gas barrier property to the film for a wavelength conversion sheet. When the inorganic oxide layer is located between the base material layer and the coating layer, the occurrence of a scratch or a crack in the inorganic oxide layer can be reduced. When the coating layer is provided in contact with the primer layer, the close adhesion between the primer layer and the barrier layer of the present disclosure can be improved.

The coating layer is a layer containing at least a water-soluble polymer. Examples of the coating layer include: a coating layer formed by applying a coating agent containing an organic component such as a water-soluble polymer; and a coating layer formed by applying a coating agent containing an inorganic oxide component and an organic component such as a water-soluble polymer.

Examples of the water-soluble polymer include polyvinyl alcohol, polyvinylpyrrolidone, and ethylene-vinyl alcohol copolymer. Among these, polyvinyl alcohol and ethylene-vinyl alcohol copolymer are preferable, and polyvinyl alcohol is more preferable from the viewpoint of the barrier property. That is, the coating layer preferably contains one or more selected from polyvinyl alcohol and ethylene-vinyl alcohol copolymer, and more preferably contains polyvinyl alcohol.

The inorganic oxide component contains at least one or more metal alkoxide-type compounds. Examples of the metal alkoxide-type compound include a metal alkoxide, a metal alkoxide hydrolysate, and a metal alkoxide polymer. The metal alkoxide hydrolysate and the metal alkoxide polymer are obtained by hydrolyzing the metal alkoxide with a sol-gel method.

The metal alkoxide is a compound represented by a general formula M(OR)ₙ. In the formula, M represents a metal such as Si, Ti, Al, and Zr, and R represents an alkyl group such as a methyl group and an ethyl group. Specific examples of the metal alkoxide include tetramethoxysilane, tetraethoxysilane, and isopropoxyaluminum.

As the inorganic oxide component, tin chloride may be further contained.

When the coating layer contains the water-soluble polymer and the metal alkoxide-type compound, a content of the water-soluble polymer to 100 parts by mass in total of the metal alkoxide-type compound is preferably 5 parts by mass or more and 500 parts by mass or less, more preferably 7 parts by mass or more and 100 parts by mass or less, and further preferably 8 parts by mass or more and 50 parts by mass or less.

The coating agent may contain the silane coupling agent, additives such as a curing agent and a dispersant, and a solvent.

The solvent is preferably a water-alcohol mixed solution.

As the silane coupling agent, a known organic reactive group-containing organoalkoxysilane can be used. In the present disclosure, an organoalkoxysilane having an epoxy group is particularly preferable, and examples thereof that can be used include γ-glycidoxypropyltrimethoxysilane, γ-glycidoxypropylmethyldiethoxysilane, or β-(3,4-epoxycyclohexyl)ethyltrimethoxysilane. Such silane coupling agents may be used singly or as a mixture of two or more. In the present disclosure, the amount of such a silane coupling agent used is preferably 1 part by mass or more and 20 parts by mass or less per 100 parts by mass of the above alkoxysilane.

A thickness of the coating layer is not particularly limited, but preferably 100 nm or more and 500 nm or less. When the thickness of the coating layer is 100 nm or more, a sufficient gas barrier property can be imparted to the film for a wavelength conversion sheet. The thickness of the coating layer is more preferably 120 nm or more, and further preferably 150 nm or more, in consideration of the gas barrier property. When the thickness of the coating layer is 500 nm or less, sufficient transparency can be ensured. The thickness of the coating layer is more preferably 300 nm or less, and further preferably 200 nm or less, in consideration of transparency, productivity, or the like. When a plurality of coating layers are provided, the thickness of each coating layer is preferably in the above thickness range.

### <Metal-phosphoric acid reaction product layer>

Examples of the layer including the reaction product of the composition including the metal oxide and the phosphorus compound (metal-phosphoric acid reaction product layer) include a layer described in WO 2011/122036. The metal is preferably aluminum.

A thickness of the metal-phosphoric acid reaction product layer is not particularly limited, but preferably 100 nm or more and 2000 nm or less. When the thickness of the metal-phosphoric acid reaction product layer is 100 nm or more, a sufficient gas barrier property can be imparted to the film for a wavelength conversion sheet. With considering the gas barrier property, the thickness of the metal-phosphoric acid reaction product layer is more preferably 200 nm or more, and further preferably 300 nm or more. When the thickness of the metal-phosphoric acid reaction product layer is 2,000 nm or less, film cracking during the film formation can be suppressed. With considering bending resistance or the like, the thickness of the metal-phosphoric acid reaction product layer is more preferably 1,000 nm or less, and further preferably 900 nm or less.

### [Diffusion layer]

The diffusion layer is a layer provided for the purpose of reducing the anisotropy of the light exit angle distribution and preventing sticking, and is a layer optionally provided in the present disclosure.

The diffusion layer includes a binder resin and a filler. The filler itself is embedded in the binder resin, and at least a part of the filler is exposed from the binder resin to the surface side of the layer to give an uneven shape to the surface of the diffusion layer, whereby the effect of reducing the anisotropy of the light exit angle distribution is exhibited.

Further, because the surface of the diffusion layer has an uneven shape, it has the role of preventing sticking even if films for a wavelength conversion sheet or wavelength conversion sheets come into contact with each other in the production process of the films for a wavelength conversion sheet or the wavelength conversion sheets. For example, when a film for a wavelength conversion sheet or a wavelength conversion sheet is produced by a winding method, the film for a wavelength conversion sheet or the wavelength conversion sheet can be easily handled and a surface scratch can be suppressed. In addition, when the diffusion layer is used for a display device, the diffusion layer also has the role of preventing the sticking between the light guide plate or the diffusing plate and the wavelength conversion sheet, and also exhibits the effect of suppressing the occurrence of a scratch due to rubbing between the light guide plate or the diffusing plate and the wavelength conversion sheet to reduce the occurrence of poor appearance of the display device.

The binder resin of the diffusion layer is not particularly limited as long as it meets the specifications required for the film for a wavelength conversion sheet and the wavelength conversion sheet. Examples thereof that can be used include an acrylic-based resin, an epoxy resin, a urethane resin, a polyester-based resin, a polyester acrylate-based resin, a polyurethane acrylate-based resin, an acrylic urethane-based resin, and an epoxy acrylate-based resin. The binder resin is preferably an acrylic-based resin in view of having high hardness.

The filler is preferably a resin filler in view of the optical performance required for the film for a wavelength conversion sheet and the wavelength conversion sheet. Examples of the resin used for the filler include an acrylic-based resin and a polystyrene-based resin. An acrylic-based resin filler is particularly preferable in view of improving the scratch resistance of the diffusion layer. The acrylic-based resin here is a polymer including an ethylenically unsaturated monomer having at least one carboxyl group or carboxylic acid ester group selected from the group consisting of methacrylic acid, acrylic acid, a methacrylic acid ester, and an acrylic acid ester as a monomer component.

The difference in refractive index between the refractive index of the filler and the refractive index of the resin binder is preferably 0.5 or less, more preferably 0.3 or less, and further preferably 0.1 or less.

The average particle size of the filler is preferably 1 µm or more and 50 µm or less, and more preferably 1.5 µm or more and 10 µm or less. When the average particle size of the filler is 1 µm or more, at least a part of the filler is exposed more from the surface of the diffusion layer, which can give appropriate light diffusivity and suppress sticking more effectively. When the average particle size of the filler is 50 µm or less, the filler is less likely to be detached from the diffusion layer, and it is possible to suppress functional deterioration of the diffusion layer and a scratch caused by the detached filler.

In the present disclosure, the average particle size means a volume-averaged value d50 in the particle size distribution measurement by a laser-light diffraction method.

The content of the filler is preferably 5% by mass or more and 50% by mass or less, and more preferably 10% by mass or more and 40% by mass or less, based on the total amount of the diffusion layer. When the content thereof is 5% by mass or more, it is possible to provide appropriate light diffusivity and effectively prevent sticking. When the content thereof is 50% by mass or less, it is easy to satisfy the optical characteristics required for the film for a wavelength conversion sheet and the wavelength conversion sheet, and further, it is also possible to improve the film forming property of the diffusion layer.

The diffusion layer may optionally include an additive such as a stabilizer, a curing agent, a crosslinking agent, a lubricant, or an ultraviolet absorber, as necessary.

The thickness of the diffusion layer is not particularly limited, and can be appropriately set according to the average particle size of the filler, the specifications required for the film for a wavelength conversion sheet and the wavelength conversion sheet, or the like. For example, the thickness of the diffusion layer is preferably 1.0 µm or more and 50.0 µm or less, and more preferably 1.5 µm or more and 10.0 µm or less. The thickness of the diffusion layer means the thickness of the resin portion other than the filler in the diffusion layer, and does not include that of a portion of the filler projecting on the resin. The thickness of a diffusion prevention layer can be measured, for example, by observing a cross section using a scanning electron microscope or the like.

### [Properties of film for wavelength conversion sheet]

The film for a wavelength conversion sheet of the present disclosure preferably has a high total light transmittance measured according to JIS K 7361-1:1997, in view of efficiently converting light from a light source when used for a wavelength conversion sheet. Specifically, the film for a wavelength conversion sheet of the present disclosure has a total light transmittance of preferably 85% or more, more preferably 90% or more, as measured according to JIS K 7361-1:1997.

A gas barrier property of the film for a wavelength conversion sheet of the present disclosure can be set according to requirement with considering degradation of the phosphor described later. Specifically, when the phosphor used for the wavelength conversion sheet has a property easy degradation by oxygen, water vapor, and the like, the film for a wavelength conversion sheet preferably has a high gas barrier property. On the other hand, when the phosphor is hardly degraded, a high gas barrier property is not required for the film for a wavelength conversion sheet.

The value of an oxygen transmission rate in accordance with JIS K 7129-2:2006 of the film for a wavelength conversion sheet is preferably 20 cc/m²·day·atm or less, more preferably 10 cc/m²·day·atm or less, further preferably 5 cc/m²·day·atm or less, and particularly preferably 2 cc/m²·day·atm or less. The value of a water vapor transmission rate of the film for a wavelength conversion sheet in accordance with JIS K 7129:2008 B method is preferably 20 g/m²·day or less, more preferably 10 g/m²·day or less, further preferably 5 g/m²·day or less, and particularly preferably 2 g/m²·day or less.

The oxygen transmission rate can be measured, for example, using an oxygen transmission rate measuring apparatus, "OX-TRAN," manufactured by MOCON, Inc. (MOCON method). The water vapor transmission rate can be measured, for example, using a water vapor transmission rate measuring apparatus, "PERMATRAN," manufactured by MOCON, Inc. The conditions for measuring the oxygen transmission rate are a temperature of 23°C and a relative humidity of 90%. The conditions for measuring the water vapor transmission rate are a temperature of 40°C and a relative humidity of 90%.

### [Phosphor layer]

The phosphor layer is a layer for adjusting the emission wavelength of light emitted from a backlight source. The phosphor layer can be formed by laminating a sealing resin containing a phosphor. For example, the phosphor layer can be formed by applying a liquid mixture containing a phosphor and a sealing resin to a surface of a base material layer and curing the applied liquid mixture. The phosphor layer contains one or two or more phosphors formed of a quantum dot.

The quantum dot forming the phosphor is a semiconductor particle of a predetermined size having the quantum confinement effect. When a quantum dot absorbs light from an excitation source and reaches an energy excited state, the quantum dot emits energy corresponding to an energy bandgap of the quantum dot. By regulating the size of the quantum dot or the composition of the substance, the energy bandgap can be regulated, and energy of wavelength bands at various levels can be obtained. In particular, the quantum dot can generate strong fluorescence in a narrow wavelength band. Therefore, the display device can be illuminated with light of the three primary colors having excellent color purity, and thereby the display device can have excellent color reproducibility.

The quantum dot preferably includes a quantum dot that emits secondary light having a wavelength corresponding to red, a quantum dot that emits secondary light having a wavelength corresponding to green, and a combination thereof. The quantum dot may contain a quantum dot other than the quantum dot that emits secondary light having a wavelength corresponding to red and the quantum dot that emits secondary light having a wavelength corresponding to green.

The core of the quantum dot is not particularly limited as long as it is a nanometer-sized fine particle of a semiconductor and is a material that generates the quantum confinement effect (quantum size effect). Examples of the quantum dot include a semiconductor fine particle whose emission color is regulated by its own particle size and a semiconductor fine particle having a dopant.

Specific examples of a material that forms the core include a semiconductor crystal containing a semiconductor compound or a semiconductor such as a group II-VI semiconductor compound such as MgS, MgSe, MgTe, CaS, CaSe, CaTe, SrS, SrSe, SrTe, BaS, BaSe, BaTe, ZnS, ZnSe, ZnTe, CdS, CdSe, CdTe, HgS, HgSe, and HgTe; a group III-V semiconductor compound such as AlN, AlP, AlAs, AlSb, GaAs, GaP, GaN, GaSb, InN, InAs, InP, InSb, TiN, TiP, TiAs, and TiSb; or a group IV semiconductor such as Si, Ge, and Pb. A semiconductor crystal including a semiconductor compound including three or more elements such as InGaP can also be used.

Further, as a quantum dot composed of a semiconductor fine particle having a dopant, a semiconductor crystal can be used that is formed by doping the above semiconductor compound with a cation of a rare earth metal or a cation of a transition metal, such as Eu³⁺, Tb³⁺, Ag⁺, or Cu⁺.

A semiconductor crystal such as CdS, CdSe, CdTe, InP, or InGaP is suitable as a material that forms the core of the quantum dot in view of ease of preparation, controllability of particle size that can provide light emission in the visible range, and fluorescence quantum yield.

The quantum dot may be made of one semiconductor compound or two or more semiconductor compounds. For example, the quantum dot may have a structure (core-shell structure) in which the core as a light emitting portion is covered with a protective layer (shell).

When the core-shell type quantum dot is used, a material having a bandgap higher than that of the semiconductor compound that forms the core can be used as the semiconductor that forms the shell so that an exciton is confined in the core, whereby the light emission efficiency of the quantum dot can be enhanced.

Examples of the core-shell structure (core/shell) having such a bandgap magnitude relationship include CdSe/ZnS, CdSe/ZnSe, CdSe/CdS, CdTe/CdS, InP/ZnS, GaP/ZnS, Si/ZnS, InN/GaN, InP/CdSSe, InP/ZnSeTe, InGaP/ZnSe, InGaP/ZnS, Si/AlP, InP/ZnSTe, InGaP/ZnSTe, and InGaP/ZnSSe.

The size of the quantum dot may be appropriately controlled by the material that constitutes the quantum dot so that light having a desired wavelength can be obtained. As the particle size of the quantum dot decreases, the energy bandgap increases. Specifically, as the crystal size decreases, the light emission of the quantum dot shifts to the blue side, that is, to the high energy side.

In general, the particle size (diameter) of the quantum dot is preferably in the range of 0.5 nm or more and 20 nm or less and particularly preferably in the range of 1 nm or more and 10 nm or less. A narrower size distribution of the quantum dot can provide a clearer emission color. The particle size of the quantum dot is an average value of particle sizes measured on randomly selected 20 quantum dots by observing a cross section of the phosphor layer by using a scanning electron microscope (SEM) or a transmission electron microscope (TEM). The particle size here is a value of a measured linear distance of a combination of two straight lines so that a linear distance between any two parallel straight lines sandwiching the cross section of the quantum dot becomes maximum.

The shape of the quantum dot is not particularly limited, and may be, for example, a spherical shape, a rod shape, a disk shape, or any other shape. When the quantum dot is not in a spherical shape, the particle size of the quantum dot can be a value of a truly spherical shape having the same volume.

The quantum dot may be coated with a resin.

The content of the quantum dot is appropriately adjusted according to the thickness of the phosphor layer, the recycling rate of light in the backlight, the target color, or the like. If the thickness of the phosphor layer is in the range described later, the content of the quantum dot is preferably 0.01 parts by mass or more and 1.0 part by mass or less per 100 parts by mass of the sealing resin of the phosphor layer.

Examples of the sealing resin of the phosphor layer include a cured product of a thermosetting resin composition, and a cured product of an ionizing radiation curable resin composition. Among these, in view of durability, a cured product of a thermosetting resin composition and a cured product of an ionizing radiation curable resin composition are preferable, and a cured product of an ionizing radiation curable resin composition is more preferable.

The thermosetting resin composition is a composition including at least a thermosetting resin, and is a resin composition that is cured by heating. Examples of the thermosetting resin include an acrylic resin, a urethane resin, a phenol resin, a urea melamine resin, an epoxy resin, an unsaturated polyester resin, and a silicone resin. These may be used singly or as a mixture of one or more. In the thermosetting resin composition, a curing agent is added, as necessary, to these curable resins.

The ionizing radiation curable resin composition is a composition including a compound having an ionizing radiation curable functional group (hereinafter, also referred to as an "ionizing radiation curable compound").

Examples of the ionizing radiation curable functional group include an ethylenically unsaturated bond group such as a (meth)acryloyl group, a vinyl group, or an allyl group, an epoxy group, and an oxetanyl group, and among these, an ethylenically unsaturated bond group is preferable. Among the ethylenically unsaturated bond groups, a (meth)acryloyl group is preferable. Hereinafter, the ionizing radiation curable compound having a (meth)acryloyl group is referred to as a (meth)acrylate-based compound. That is, the sealing resin preferably includes a cured product of a composition including a (meth)acrylate-based compound.

As used herein, "(meth)acrylate" refers to methacrylate and acrylate. As used herein, "ionizing radiation" means an electromagnetic wave or a charged particle beam having an energy quantum that can polymerize or crosslink a molecule among electromagnetic waves or charged particle beams. An ultraviolet ray (UV) or an electron beam (EB) is usually used, and an electromagnetic wave such as an X-ray or a γ-ray, and a charged particle beam such as an α-ray or an ion beam can also be used.

The ionizing radiation curable compound may be a monofunctional ionizing radiation curable compound having only one such functional group, a polyfunctional ionizing radiation curable compound having two or more such functional groups, or a mixture thereof. Among these, a polyfunctional ionizing radiation curable compound is preferable, and a polyfunctional (meth)acrylate-based compound having two or more (meth)acryloyl groups is more preferable. That is, the sealing resin includes preferably a cured product of a polyfunctional ionizing radiation curable compound and more preferably a cured product of a polyfunctional (meth)acrylate-based compound.

The polyfunctional (meth)acrylate-based compound may have an alkyleneoxy group.

As the alkyleneoxy group, for example, an alkyleneoxy group having 2 to 4 carbon atoms is preferable, an alkyleneoxy group having 2 or 3 carbon atoms is more preferable, and an alkyleneoxy group having 2 carbon atoms is further preferable.

The polyfunctional (meth)acrylate-based compound having an alkyleneoxy group may be a polyfunctional (meth)acrylate-based compound having a polyalkyleneoxy group including a plurality of alkyleneoxy groups.

When the polyfunctional (meth)acrylate-based compound has an alkyleneoxy group, the number of alkyleneoxy groups in one molecule is preferably 2 to 30, and more preferably 2 to 20, further preferably 3 to 10, and more further preferably 3 to 5.

When the polyfunctional (meth)acrylate-based compound has an alkyleneoxy group, the compound preferably has a bisphenol structure. This tends to improve the heat resistance of the cured product. Examples of the bisphenol structure include a bisphenol A structure and a bisphenol F structure, and among these, a bisphenol A structure is preferable.

As the polyfunctional (meth)acrylate-based compound having an alkyleneoxy group, above all, ethoxylated bisphenol A type di(meth)acrylate, propoxylated bisphenol A type di(meth)acrylate, and propoxylated ethoxylated bisphenol A type di(meth)acrylate are preferable, and ethoxylated bisphenol A type di(meth)acrylate is more preferable.

The ionizing radiation curable compound may be a monomer, an oligomer, a low molecular weight polymer, or a mixture thereof.

The thermosetting curable resin composition and the ionizing radiation curable resin composition preferably contain a thiol compound.

The thiol compound is a compound having one or more units represented by R-SH (R represents an organic group). In the present disclosure, a compound having one unit represented by R-SH refers to a monofunctional thiol compound, and a compound having two or more units represented by R-SH refers to a polyfunctional thiol compound.

The thiol compound may be the monofunctional thiol compound, but preferably the polyfunctional thiol compound in order to improve strength of the phosphor layer. Among the polyfunctional thiol compounds, a trifunctional thiol compound or a tetrafunctional thiol compound are more preferable.

The thiol compound causes a reaction represented by the following formula (a thiol-ene reaction) with a compound having a radically polymerizable functional group in the presence of a radical polymerization initiator. Since the thiol-ene reaction can suppress polymerization contraction, strain generated in curing the phosphor layer is relaxed, and as a result, the interlayer close adhesion of the wavelength conversion sheet is more easily improved, which is preferable. The cured product obtained by the thiol-ene reaction easily improves heat resistance, which is preferable. Further, since a refractive index of the thiol compound (about 1.53) is higher than a refractive index of a polyfunctional (meth)acrylate-based compound (about 1.45), a degree of freedom of regulating the refractive index of the phosphor layer can be improved.

Note that the following reaction is a reaction example between the monofunctional thiol compound and a compound having one radically polymerizable functional group. A reaction product between the polyfunctional thiol compound and a compound having two or more radically polymerizable functional groups is considered to easily form a dendrimer structure. When the dendrimer structure is formed, it is considered that flexibility of the phosphor layer increases to allow the phosphor layer itself to easily exhibit excellent strain relaxation ability. Examples of the radically polymerizable functional group include an ethylenically unsaturated bond-containing group such as a (meth)acryloyl group, a vinyl group, and an allyl group.

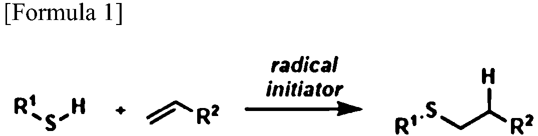

In the formula, R¹ and R² represent an organic group.

Specific examples of the monofunctional thiol compound include hexanethiol, 1-heptanethiol, 1-octanethiol, 1-nonanethiol, 1-decanethiol, 3-mercaptopropionic acid, methyl mercaptopropionate, methoxybutyl mercaptopropionate, octyl mercaptopropionate, tridecyl mercaptopropionate, 2-ethylhexyl 3-mercaptopropionate, and n-octyl-3-mercaptopropionate.

Specific examples of the polyfunctional thiol compound include ethylene glycol bis(3-mercaptopropionate), diethylene glycol bis(3-mercaptopropionate), tetraethylene glycol bis(3-mercaptopropionate), 1,2-propylene glycol bis(3-mercaptopropionate), diethylene glycol bis(3-mercaptobutyrate), 1,4-butanediol bis(3-mercaptopropionate), 1,4-butanediol bis(3-mercaptobutyrate), 1,8-octanediol bis(3-mercaptopropionate), 1,8-octanediol bis(3-mercaptobutyrate), hexanediol bisthioglycolate, trimethylolpropane tris(3-mercaptopropionate), trimethylolpropane tris(3-mercaptobutyrate), trimethylolpropane tris(3-mercaptoisobutyrate), trimethylolpropane tris(2-mercaptoisobutyrate), trimethylolpropane tristhioglycolate, tris-[(3-mercaptopropionyloxy)-ethyl] isocyanurate, trimethylolethane tris(3-mercaptobutyrate), pentaerythritol tetrakis(3-mercaptopropionate), pentaerythritol tetrakis(3-mercaptobutyrate), pentaerythritol tetrakis(3-mercaptoisobutyrate), pentaerythritol tetrakis(2-mercaptoisobutyrate), dipentaerythritol hexakis(3-mercaptopropionate), dipentaerythritol hexakis(2-mercaptopropionate), dipentaerythritol hexakis(3-mercaptobutyrate), dipentaerythritol hexakis(3-mercaptoisobutyrate), dipentaerythritol hexakis(2-mercaptoisobutyrate), pentaerythritol tetrakisthioglycolate, and dipentaerythritol hexakisthioglycolate.

In the ionizing radiation curable resin composition (or the thermosetting resin composition), a mass ratio between the ionizing radiation curable resin composition (or the thermosetting resin composition) and the thiol compound (the resin composition / the thiol compound) is preferably 80/20 to 35/65, and more preferably 70/30 to 40/60.

When the ionizing radiation curable compound is an ultraviolet curable compound, the ionizing radiation curable composition preferably includes an additive such as a photopolymerization initiator or a photopolymerization accelerator.

As the photopolymerization initiator, a phosphorus-based photopolymerization initiator can be used. Examples of the phosphoric acid-based photopolymerization initiator include Omnirad 819 (manufactured by IGM Resins B.V.) and Omnirad TPO H (manufactured by IGM Resins B.V.).

The phosphor layer may include an internal diffusion particle.

As the internal diffusion particle, either of an organic particle and an inorganic particle can be used. Examples of the organic particle include a particle made of polymethyl methacrylate, an acrylic-styrene copolymer, a melamine resin, a polycarbonate, a polystyrene, polyvinyl chloride, a benzoguanamine-melamine-formaldehyde condensate, a silicone resin, a fluororesin, a polyester, or the like. Examples of the inorganic fine particle include a fine particle made of silica, alumina, zirconia, titania, or the like.

Examples of the shape of the internal diffusion particle include a spherical shape, a disk shape, a rugby ball shape, and an irregular shape. The internal diffusion particle may be any of a hollow particle, a porous particle, and a solid particle.

The content of the internal diffusion particle is preferably 1 part by mass or more and 40 parts by mass or less and more preferably 3 parts by mass or more and 30 parts by mass or less per 100 parts by mass of the sealing resin.

The average particle size of the internal diffusion particle is preferably 1 µm or more and 7 µm or less and more preferably 1 µm or more and 3 µm or less. The average particle size of the internal diffusion particle is an average value of particle sizes measured on randomly selected 20 internal diffusion by observing a cross section of the phosphor layer by using a scanning electron microscope (SEM) or a transmission electron microscope (TEM). The particle size here is a value of a measured linear distance of a combination of two straight lines so that a linear distance between any two parallel straight lines sandwiching the cross section of the quantum dot becomes maximum.

The thickness of the phosphor layer is preferably 10 µm or more and 200 µm or less, more preferably 20 µm or more and 150 µm or less, and further preferably 30 µm or more and 130 µm or less.

The refractive index n_{Z} of the phosphor layer is preferably 1.40 or more and 1.55 or less, more preferably 1.43 or more and 1.52 or less, and further preferably 1.46 or more and 1.50 or less.

The refractive index n_{Z} of the phosphor layer is approximately dominated by the refractive index of the sealing resin. The reason for this is as follows: the phosphor layer has a low quantum dot content, and even if an internal diffusion agent is contained, the internal diffusion agent has a particle size larger than the wavelength of light and does not affect the refractive index of the layer.

### [Method for producing wavelength conversion sheet]

A method for producing the wavelength conversion sheet of the present disclosure includes: (1) a step of producing the film for a wavelength conversion sheet; and (2) a step of contacting the film for a wavelength conversion sheet and the phosphor layer.

The film for a wavelength conversion sheet of the present disclosure is produced by the following steps, for example.

### (1-1) Barrier layer forming step

The barrier layer is formed on one surface of a base material layer (or a first base material). The barrier layer formation step may be omitted.

When the coating layer and the inorganic oxide layer are used as the barrier layer as exemplified in Fig. 1, the inorganic oxide layer is formed first on the base material layer (or the first base material), and the coating layer is formed on this inorganic oxide layer.

The surface of the base material layer (or the first base material) on which the barrier layer is formed may be subjected to the above surface treatment in advance, or on the surface thereof, an underlying layer may be formed.

The inorganic oxide layer can be formed by vapor deposition or a sol-gel method. Examples of the method for vapor-depositing an inorganic oxide include a physical vapor deposition method (PVD method) such as a vacuum vapor deposition method, a sputtering method, and an ion plating method, or a chemical vapor deposition method (CVD method) such as a plasma chemical vapor deposition method, a thermochemical vapor deposition method, and a photochemical vapor deposition method.

The coating layer can be formed by applying the coating agent containing at least an organic component such as a water-soluble polymer, and curing the coating agent by heating. The coating agent is prepared by adding a solvent or the like so as to obtain a desired gas barrier property, thickness, viscosity, and the like. Examples of the method for applying the coating agent include an application method of roll coating, gravure coating, knife coating, dip coating, spray coating, or another coating method.

The metal-phosphoric acid reaction product layer can be formed by a method described in WO 2011/122036.

### (1-2) Primer layer formation step

A primer layer is formed on the base material layer or the barrier layer. The primer layer can be formed by applying a coating agent of the resin composition including the above polyurethane-based resin and curing the applied coating agent by heating. The coating agent is prepared by adding a solvent or the like to the coating agent such that thickness, viscosity, or the like can be obtained. Examples of the method for applying the coating agent include an application method of roll coating, gravure coating, knife coating, dip coating, spray coating, or another coating method. The heating temperature is preferably within a range of 50°C or higher and 180°C or lower.

When the base material layer is configured by laminating a plurality of base materials as illustrated in Fig. 1, the method for producing the film for a wavelength conversion sheet of the present disclosure further includes (1-3) an adhesion step after (1-2) the primer layer forming step.

### (1-3) Adhesion step

In the adhesion step, the surface of the opposite side of the first base material from the barrier layer and the second base material are laminated via an adhesion layer.

Specifically, the above adhesive is applied to the surface of the first base material, the second base material is overlapped, and the adhesion layer is cured. Alternatively, a coating agent including a crosslinking agent and a resin is applied to the surface of the first base material, then the second base material is overlapped, and the coating agent is crosslinked by heat or the like. The method for applying an adhesive or a coating agent can be applied by roll coating, gravure coating, knife coating, dip coating, spray coating, another coating method, a printing method, or the like.

Alternatively, a melted thermoplastic resin may be caused to flow between the first base material and the second base material by extrusion lamination, and then cooled to form an adhesion layer.

When a diffusion layer is provided as shown in Fig. 1, the diffusion layer is preferably formed in advance on the base material layer or the second base material.

Specifically, a coating agent including a resin, a filler, a solvent, and the like can be applied to the surface of the opposite side of the base material layer or the second base material from the surface on which the barrier layer is provided, and cured to form the diffusion layer. Examples of the method for applying the coating agent include an application method of roll coating, gravure coating, knife coating, dip coating, spray coating, or another coating method.

### (2) Step of contacting phosphor layer and film for wavelength conversion sheet

In this step, the primer layer of the film for a wavelength conversion sheet and the phosphor layer are contacted. Hereinafter, exemplified is a method for producing the wavelength conversion sheet having a configuration in which the phosphor layer is sandwiched by the film for a wavelength conversion sheet.

Specifically, a mixed liquid containing the phosphor and the sealing resin (the resin composition being the precursor of the phosphor layer) is prepared. In the present disclosure, a solvent that hardly erodes the component of the resin composition to constitute the primer layer is used as a solvent for the mixed liquid. For example, when the primer layer contains a cured product of the polyurethane-based resin composition, a hydrophobic solvent such as ethyl acetate, toluene, and methyl ethyl ketone is used.

On the surface of the primer layer of the film for a wavelength conversion sheet prepared in (1), the above mixed liquid is applied to form a coating film. Examples of the method for applying the mixed liquid include an application method of roll coating, gravure coating, knife coating, dip coating, spray coating, or another coating method.

On the surface opposite to the phosphor layer, the primer layer of another film for a wavelength conversion sheet prepared in (1) is contacted. Thereafter, the coating film is cured by heat, ionizing radiation, or the like to obtain the wavelength conversion sheet.

### [Backlight]

The backlight of the present disclosure is a backlight including at least one light source that emits primary light, an optical plate that is disposed adjacent to the light source and is for light guiding or diffusion, and a wavelength conversion sheet (quantum dot sheet) disposed on a light emission side of the optical plate, wherein the wavelength conversion sheet is the wavelength conversion sheet of the present disclosure described above.

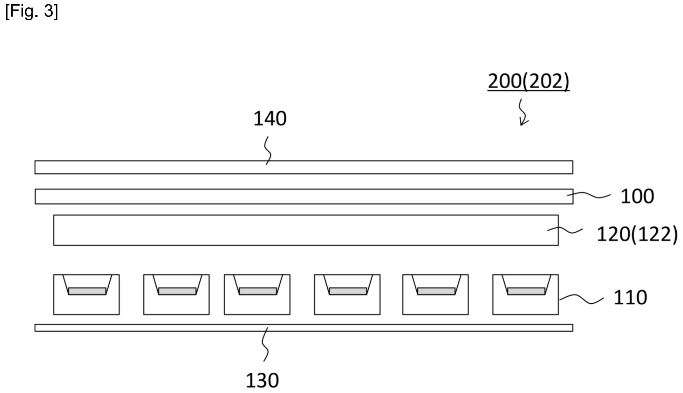

As a backlight 200 of the present disclosure, either the edge-lit type backlight shown in Fig. 2 or the direct-lit type backlight shown in Fig. 3 can be adopted.

An optical plate 120 used for the edge-lit type backlight 201 in Fig. 2 is an optical member for guiding primary light emitted by a light source 110, and is a so-called light guide plate 121. The light guide plate 121 has, for example, a substantially flat plate shape configured to have at least one surface as a light coming-in surface and one surface substantially orthogonal to the light coming-in surface as a light emission surface.

The light guide plate is mainly made of a matrix resin selected from the group consisting of a highly transparent resin such as polymethyl methacrylate. A resin particle having a refractive index different from that of the matrix resin may be added, as necessary, to the light guide plate. Each surface of the light guide plate may have a complicated surface shape instead of a uniform flat surface, and may be provided with a dot pattern or the like.

The optical plate 120 used for the direct-lit type backlight 202 of Fig. 3 is an optical member (light diffusing material 122) having a light diffusing property for making the pattern of the light source 110 less visible. Examples of the light diffusing material 122 include a milky white resin plate having a thickness of about 1 to 3 mm.

In addition to the light source, the optical plate, and the wavelength conversion sheet described above, the edge-lit type and direct-lit type backlights may include one or more members selected from a reflector, a light diffusing film, a prism sheet, a brightness enhancement film (BEF), a reflective polarizing film (DBEF), and the like, depending on the purpose. The reflector is disposed on the opposite side of the optical plate from the light emission surface side. The light diffusing film, the prism sheet, the brightness enhancement film, and the reflective polarizing film are disposed on the light emission surface side of the optical plate. A backlight having an excellent balance of front brightness, viewing angle, and the like can be provided when the backlight is configured to include one or more members selected from the group consisting of a reflector, a light diffusing film, a prism sheet, a brightness enhancement film, a reflective polarizing film, and the like.

In the edge-lit type and direct-lit type backlights, the light source 110 is a light emitting body that emits primary light, and it is preferable to use a light emitting body that emits primary light having a wavelength corresponding to blue. The primary light having a wavelength corresponding to blue preferably has a peak wavelength in the range of 380 nm to 480 nm. The peak wavelength is more preferably 450 nm ± 7 nm, more preferably 450 nm ± 5 nm, more preferably 450 nm ± 3 nm, and more preferably 450 nm ± 1 nm.

The light source 110 is preferably an LED light source and more preferably a blue monochromatic LED light source, in view of simplifying and downsizing the apparatus in which the backlight is installed. Alternatively, a red phosphor may be applied onto a blue monochromatic LED light source to provide a light source that exhibits a blue color and a red color. The number of the light source 110 is at least one, and it is preferable to provide a plurality thereof, in view of emitting sufficient primary light.

### [Display device]

Examples of the display device include a liquid crystal display device. The liquid crystal display device includes a backlight and a liquid crystal panel. The backlight is the backlight of the present disclosure described above.

The liquid crystal panel is not particularly limited, and a general-purpose liquid crystal panel can be used as the liquid crystal panel of the liquid crystal display device. For example, a liquid crystal panel having a general structure can be used in which the liquid crystal layer is sandwiched between glass plates on the upper side and the lower side, respectively, thereof, specifically, a liquid crystal panel using a display mode such as TN, STN, VA, IPS, and OCB.

The liquid crystal display device further includes a polarizing plate, a color filter, and the like. A general-purpose polarizing plate and color filter can be used.

The wavelength conversion sheet of the present disclosure has particularly excellent close adhesion between the film for a wavelength conversion sheet and the phosphor layer. Therefore, when the wavelength conversion sheet of the present disclosure is applied to a display device (liquid crystal display device), degradation of the phosphor layer due to the invasion thereof by water vapor or oxygen from the external environment can be effectively suppressed. As a result, a display device including a backlight light source having excellent environmental stability can be obtained.

The application of the display device of the present disclosure is not particularly limited, but the display device of the present disclosure is preferably used for a small-sized electronic device such as a television, a smartphone, and a tablet.

### Examples

Next, the present invention will be described in more detail with Examples, but the present invention is not limited by these Examples at all.

### 1. Evaluations and measurements

The wavelength conversion sheet produced by the following production method was subjected to the following measurements and evaluations. Results are shown in Table 1. Unless otherwise specified and unless the test was carried out in a specific environment, the atmosphere at the time of each measurement and evaluation was a temperature of 23 ± 5°C and a relative humidity of 40 to 65%, and before the start of each measurement and evaluation, the target sample was exposed to the above atmosphere for 30 minutes or more and then the measurement and evaluation were carried out.

### 1-1. XPS analysis

From the wavelength conversion sheets of Examples and Comparative Example, a test piece with 25 mm × 150 mm was cut. The test piece was collected by removing an inside region of 1 cm from an edge of the wavelength conversion sheet. The edges on both sides on a short side of the test piece were gripped, and peeling was performed so that the angle was about 90 degrees.

From the two test pieces after the peeling, a sample for XPS analysis was each collected. On this sample, an X-ray photoelectron spectrum on the peeling surface was measured by using an X-ray photoelectron spectrometer (ESCA3400, manufactured by Shimadzu Corporation). The measurement condition will be described later. Elements on the peeling surface of each of the test pieces was identified by a survey spectrum. When nitrogen was detected on the peeling surface of one test piece and nitrogen was not detected on the peeling surface of the other test piece, it was judged that the peeling was appropriately performed on the interface between the primer layer and the phosphor layer, and the subsequent analysis was performed. The test piece in which nitrogen was not detected had a configuration of the film for a wavelength conversion sheet in which the phosphor layer was laminated, and the peeling surface was specified as the surface of the phosphor layer. The test piece in which nitrogen was detected had a configuration of only the film for a wavelength conversion sheet, and the peeling surface was specified as the surface of the primer layer.

On the test piece on the primer layer side and the test piece on the phosphor layer side, a proportion of the detected element was calculated by using a narrow spectrum.

Thereafter, the surface after the measurement was subjected to etching under a condition, described later, to expose a new measurement surface. An X-ray photoelectron spectrum was measured on the exposed measurement surface under the same condition to calculate the proportion of each element. Specifically, on each of narrow spectra of C1s, N1s, O1s, Al2p, Si2p, and S2p, a background was subtracted by a Shirley method by using an analysis software (Vision Processing), attached to the apparatus, to obtain an integration intensity (area) of a peak of each element. The proportion (atomic%) of each element was calculated by using the obtained integration intensity (area).

On each of the sheet on the primer layer side and the sheet on the phosphor layer side, the etching, the measurement, and the calculation of the proportions of the elements were repeated to obtain the depth profiles of the elements contained in the primer layer and the phosphor layer.

### <Measurement condition of X-ray photoelectron spectrum>

Apparatus: ESCA3400, manufactured by Shimadzu Corporation
X-ray source: MgKα (hv=1253.6 eV)
Emission current: 20 mA
Acceleration voltage: 10 kV
Photoelectron collection angle: 90°
Measurement region: 6 mmϕ
Charge neutralization: not performed
Resolution: Low
Scanning control: B.E.
Peak shift correction: C1s peak was corrected so that C-C peak was 285.0 eV.

### <Etching condition>

Apparatus: attached to X-ray photoelectron spectrometer
Ion type: Ar⁺ (argon single-atom ion)
Pressure for introducing Ar gas: 2.0×10⁻² Pa
Emission current: 30 mA (measurement on the primer layer side of Example 1), 20 mA (other measurements)
Acceleration voltage: 0.3 kV (measurement on the primer layer side of Example 1), 0.2 kV (other measurements)

### 1-2. Evaluation of initial close adhesion

From the wavelength conversion sheets of Examples and Comparative Examples, a test piece with 25 mm × 150 mm was cut. The test piece was collected from randomly selected three locations except for the inside region of 1 cm from the edge of the wavelength conversion sheet. By using a desktop material tester (STA-1150, available from Takachiho-Seiki. Co., Ltd.), a peeling test was performed under conditions of a tension speed of 300 mm/min, a peeling direction of 180°, and a distance between chucks of 15 mm in a temperature environment of 23°C, and the peel strength between the primer layer and the phosphor layer was measured for each test piece. An average value of the obtained peel strength was regarded as the initial peel strength (before a high-temperature high-humidity test).

### 1-3. Evaluation of temporal close adhesion

The wavelength conversion sheets of Examples and Comparative Examples were placed in a thermohygrostat bath adjusted to 60°C and 90%RH. After 500 hours had passed, the wavelength conversion sheets were taken out of the thermohygrostat bath.

On the taken wavelength conversion sheets, the peel strength of each test piece was measured according to the procedures in 1-2. The test piece was collected from randomly selected three locations except for the inside region of 1 cm from the edge of the wavelength conversion sheet. An average value of the peel strength of the test piece obtained was used as the peel strength after each time had passed.

### 2. Preparation of sample

### <Example 1>

As a first base material, an aluminum oxide thin film (AlOx, target thickness: 8 nm) was vapor-deposited on a PET film (thickness: 12 µm) by a vacuum vapor deposition method to form an inorganic oxide layer.

Tetraethoxysilane was mixed into a solution (pH 2.2) obtained by mixing water, isopropyl alcohol, and 0.5 N hydrochloric acid, while cooling the solution to 10°C, to thereby prepare solution A. Separately, polyvinyl alcohol having a saponification value of 99% or more and isopropyl alcohol were mixed to thereby prepare solution B. Solution A and solution B were mixed to prepare the coating liquid for coating layer formation (solid content: 5%).

Next, the coating liquid for coating layer formation was applied onto the inorganic oxide layer by gravure printing and heat-treated at 180°C for 60 seconds to form a coating layer having a thickness of 180 nm.

Then, a coating liquid 1 for primer layer formation having the following formulation was prepared. The coating liquid 1 for primer layer formation had NCO/OH ratio of 3.0.

### <Coating liquid 1 for forming primer layer>

- Polyester polyurethane polyol (hydroxyl value: 5.0 mgKOH/g, solid content: 30%) 50 parts by mass
- Isocyanate (mixture of 1,3-xylylene diisocyanate and polymethyl methacrylate, NCO content: 10 mass%) 5 parts by mass
- Polyester (Tg: 70°C) 20 parts by mass
- Silane coupling agent (3-methacryloxypropyltrimethoxysilane) 1 part by mass
- Silica powder (average particle size of 3 µm) 0.5 parts by mass
- Dibutylhydroxytoluene (BHT) 1 part by mass
- Solvent (methyl ethyl ketone) 50 parts by mass

Next, the coating liquid 1 for primer layer formation was applied onto the coating layer. The amount of the applied coating liquid was 0.5 g/m². Thereafter, the coating was dried at 80°C for 60 seconds to form a primer layer having a thickness of 0.4 µm (400 nm).

A urethane-based adhesive (manufactured by Rock Paint Co., Ltd., trade name "RU-004, H-1") was applied, by gravure printing, onto the surface of the opposite side of the first base material from the surface on which the inorganic oxide layer to the primer layer were formed, and dried to form an adhesion layer having a thickness of 4 µm.

Next, a PET film (thickness: 100 µm) was disposed as a second base material on the adhesion layer side of the first base material, and the first base material and the second base material were bonded together under conditions of nip pressure: 0.2 MPa and line speed: 50 m/min to prepare a film for a wavelength conversion sheet.

In a glovebox purged with nitrogen so that the oxygen concentration was 300 ppm or less, a quantum dot (phosphor) and amino-modified silicone were mixed at the following composition ratio, and the mixture was stirred for 4 hours with a magnetic stirrer while boiling at 90°C. Thereafter, the mixture was filtered with a polypropylene filter having a pore size of 0.2 µm to obtain a CdSe/ZnS core-shell quantum dot dispersion.
- Quantum dot 1 (emission peak: 540 nm, production number: 748056, manufactured by Sigma-Aldrich, Inc.) 0.9 parts by mass
- Quantum dot 2 (emission peak: 630 nm, production number: 790206, manufactured by Sigma-Aldrich, Inc.) 0.9 parts by mass
- Amino-modified silicone (manufactured by Genesee Polymers Corporation, trade number: GP-344, viscosity: 670 mPa·s) 99 parts by mass

By using the quantum dot dispersion produced above, a resin composition having the following formulation for forming the phosphor layer was prepared.
- Polyfunctional acrylate-based compound (ethoxylated bisphenol A diacrylate: trade name of SHIN-NAKAMURA CHEMICAL Co., Ltd. "ABE-300") 58.11 parts by mass
- Polyfunctional thiol compound (pentaerythritol tetrakis(3-mercaptopropionate); trade name of SC ORGANIC CHEMICAL CO., LTD. "PEMP") 38.74 parts by mass
- Photopolymerization initiator (trade name of IGM Resins B.V. "Omnirad TPO H") 0.5 parts by mass
- Quantum dot dispersion 1.61 parts by mass
- Ethyl acetate: 0.79 parts by mass
- Titanium oxide (trade name of The Chemours Company "Ti-Pure R-706"; particle size of 0.36 µm) 0.25 parts by mass

The above resin composition was applied on the primer layer of the film for a wavelength conversion sheet so that the thickness was 100 µm (after drying) to form the phosphor layer.

Another film for a wavelength conversion sheet prepared by the above procedure was laminated on the above phosphor layer so that the primer layer was in contact with the phosphor layer. Thereafter, the sealing resin of the phosphor layer was UV-cured to prepare a wavelength conversion sheet of Example 1.

### <Example 2>

A wavelength conversion sheet of Example 2 was prepared in the same steps as in Example 1 except that a coating liquid 2 for forming a primer layer having the following formulation was prepared, and a primer layer with 0.4 µm (400 nm) in thickness was formed. The coating liquid 2 for forming a primer layer differed from the coating liquid 1 for forming a primer layer in terms of use of a polyester having a high glass transition point. The coating liquid 2 for forming a primer layer had an NCO/OH ratio of 3.0.

### <Coating liquid 2 for forming primer layer>

- Polyester polyurethane polyol (hydroxyl value: 5.0 mgKOH/g, solid content: 30%) 50 parts by mass
- Isocyanate (mixture of 1,3-xylylene diisocyanate and polymethyl methacrylate, NCO content: 10 mass%) 5 parts by mass
- Polyester (Tg: 80°C) 20 parts by mass
- Silane coupling agent (3-methacryloxypropyltrimethoxysilane) 1 part by mass
- Silica powder (average particle size of 3 µm) 0.5 parts by mass
- Dibutylhydroxytoluene (BHT) 1 part by mass
- Solvent (methyl ethyl ketone) 50 parts by mass

### <Example 3>

A wavelength conversion sheet of Example 3 was prepared in the same steps as in Example 1 except that a coating liquid 3 for forming a primer layer having the following formulation was prepared, and a primer layer with 0.4 µm (400 nm) in thickness was formed. The coating liquid 3 for forming a primer layer differed from the coating liquid 1 for forming a primer layer in terms of the blending amount of the polyester. The coating liquid 3 for forming a primer layer had an NCO/OH ratio of 3.0.

### <Coating liquid 3 for forming primer layer>

- Polyester polyurethane polyol (hydroxyl value: 5.0 mgKOH/g, solid content: 30%) 50 parts by mass
- Isocyanate (mixture of 1,3-xylylene diisocyanate and polymethyl methacrylate, NCO content: 10 mass%) 5 parts by mass
- Polyester (Tg: 70°C) 30 parts by mass
- Silane coupling agent (3-methacryloxypropyltrimethoxysilane) 1 part by mass
- Silica powder (average particle size of 3 µm) 0.5 parts by mass
- Dibutylhydroxytoluene (BHT) 1 part by mass
- Solvent (methyl ethyl ketone) 50 parts by mass

### <Comparative Example 1>

A wavelength conversion sheet of Comparative Example 1 was prepared in under the same condition as in Example 1 except that the formulation of the primer layer was changed to the below, and a film for a wavelength conversion sheet in which a primer layer with 0.3 µm (300 nm) in thickness was formed was used.
- Polyester polyurethane polyol (hydroxyl value: 62 mgKOH/g, solid content: 20 mass%) 50 parts by mass
- Silane coupling agent (3-glycidoxypropylmethyldimethoxysilane) 1 part by mass
- Silica filler (average particle size of 5 µm) 1 part by mass
- Curing agent (1,6-hexamethylene diisocyanate, solid content: 35%) 1 part by mass
- Solvent (methyl ethyl ketone) 50 parts by mass

### 3. Results

As for the wavelength conversion sheet of Example 1, Table 1 shows the proportion of each element in the depth direction of the primer layer, and Table 2 shows the proportion of each element in the depth direction of the phosphor layer. As for the wavelength conversion sheet of Example 2, Table 3 shows the proportion of each element in the depth direction of the primer layer, and Table 4 shows the proportion of each element in the depth direction of the phosphor layer. As for the wavelength conversion sheet of Example 3, Table 5 shows the proportion of each element in the depth direction of the primer layer, and Table 6 shows the proportion of each element in the depth direction of the phosphor layer. As for the wavelength conversion sheet of Comparative Example 1, Table 7 shows the proportion of each element in the depth direction of the primer layer, and Table 8 shows the proportion of each element in the depth direction of the phosphor layer.

In Tables 1 to 8, elements other than carbon (C), nitrogen (N), oxygen (O), and sulfur (S) were summarized as "Others." In the present Examples, the element X was sulfur. In each Table, the proportion of each element is shown to one decimal place. The unit of the proportion of each element is atomic%.

Tables 1 to 8 show each etching time converted into the etched depth. The depth was converted by the following procedure. First, the wavelength conversion sheet was prepared as a sample, and an ultrathin specimen was collected from a cross section of the wavelength conversion sheet by using an ultramicrotome and a diamond knife. This ultrathin specimen was observed by using a transmission mode of a scanning electron microscope (SEM, SU8000, manufactured by Hitachi High-Tech Corporation) to measure film thicknesses of the primer layer and the phosphor layer. The measurement was performed at randomly selected three locations. As for each of the primer layer and the phosphor layer, an average value of the film thicknesses at the three locations was respectively specified as film thicknesses of the primer layer and the phosphor layer. Then, the primer layer of the same sample was exposed from the wavelength conversion sheet by the above method, and XPS analysis was performed by the procedure described in 1-1 to obtain a depth profile of each element contained in the primer layer. Here, the etching and the measurement were repeated until the proportion of each element largely changed and until a measurement point at which a proportion of the element (Si) contained in the barrier layer located as an underlayer of the primer layer exceeded 5 atomic% was obtained. Then, obtained was an etching time at which the proportions of carbon (C), oxygen (O), and silicon (Si) reached an inflection point. This etching time was regarded as the interface between the primer layer and the barrier layer (the coating layer). An etching rate was calculated from the etching time at the inflection point and the film thickness of the primer layer, and the etching rate was used to convert each etching time into the depth. A depth profile of each element in the phosphor layer was also obtained by the same procedure as above. As for the primer layer, the etching and the measurement were repeated until nitrogen (N) was detected. An etching time at which the proportion of nitrogen (N) reached an inflection point was obtained. This etching time was regarded as the interface between the phosphor layer and the primer layer of the other film for a wavelength conversion sheet. An etching rate was calculated from the etching time at the inflection point and the film thickness of the phosphor layer, and the etching rate was used to convert each etching time into the depth.

In each Table, the peeling surface on the primer layer side and the peeling surface on the phosphor layer side were each specified as 0 nm in depth. As for the phosphor layer side (Tables 2, 4, 6, and 8), the results until the etching time of 3500 seconds are shown.

### [Table 1]

**Table 1**

| Etching time [sec] | Depth [nm] | C | N | O | S | Others | C_{PR}/C_{QD} |
|---|---|---|---|---|---|---|---|
| 0 | 0 | 59.9 | 1.2 | 32.2 | 0.8 | 6.0 | 0.06 |
| 10 | 2 | 76.2 | 2.0 | 18.6 | 0.7 | 2.5 | 0.06 |
| 50 | 11 | 82.2 | 1.6 | 14.7 | 0.7 | 0.8 | 0.05 |
| 100 | 23 | 83.2 | 2.1 | 14.5 | 0.2 | 0.0 | 0.01 |
| 250 | 57 | 84.9 | 1.6 | 13.5 | 0.1 | 0.0 | 0.01 |
| 500 | 114 | 85.1 | 1.8 | 13.1 | 0.1 | 0.0 | 0.00 |
| 750 | 171 | 84.9 | 1.8 | 13.4 | 0.0 | 0.0 | 0.00 |
| 1000 | 229 | 84.9 | 1.7 | 13.4 | 0.0 | 0.0 | 0.00 |
| 1500 | 343 | 85.3 | 0.8 | 12.7 | 0.0 | 1.2 | 0.00 |
| 2000 | 457 | 60.8 | 0.9 | 24.5 | 0.0 | 13.8 | 0.00 |
| 2500 | 571 | 41.4 | 0.9 | 33.3 | 0.0 | 24.4 | 0.00 |
| 3000 | 686 | 29.7 | 0.3 | 38.6 | 0.0 | 31.4 | 0.00 |
| 3500 | 800 | 23.3 | 0.0 | 41.8 | 0.0 | 35.0 | 0.00 |

### [Table 2]

**Table 2**

| Etching time [sec] | Depth [nm] | C | N | O | S | Others |
|---|---|---|---|---|---|---|
| 0 | 0 | 60.4 | 0.0 | 26.6 | 11.1 | 1.9 |
| 10 | 1 | 60.1 | 0.0 | 24.7 | 12.7 | 2.5 |
| 50 | 6 | 65.1 | 0.0 | 19.4 | 14.5 | 1.0 |
| 100 | 11 | 70.8 | 0.0 | 15.0 | 14.2 | 0.0 |
| 250 | 28 | 74.7 | 0.0 | 11.5 | 13.8 | 0.0 |
| 500 | 56 | 76.6 | 0.0 | 10.9 | 12.5 | 0.0 |
| 750 | 84 | 76.0 | 0.0 | 10.8 | 13.3 | 0.0 |
| 1000 | 112 | 76.1 | 0.0 | 11.0 | 12.9 | 0.0 |
| 1500 | 168 | 76.4 | 0.0 | 10.5 | 13.1 | 0.0 |
| 2000 | 224 | 77.6 | 0.0 | 9.6 | 12.8 | 0.0 |
| 2500 | 280 | 76.6 | 0.0 | 10.3 | 13.1 | 0.0 |
| 3000 | 336 | 78.2 | 0.0 | 8.9 | 12.9 | 0.0 |
| 3500 | 392 | 77.2 | 0.0 | 9.7 | 13.2 | 0.0 |

### [Table 3]

**Table 3**

| Etching time [sec] | Depth [nm] | C | N | O | S | Others | C_{PR}/C_{QD} |
|---|---|---|---|---|---|---|---|
| 0 | 0 | 65.0 | 1.1 | 27.1 | 0.9 | 5.9 | 0.07 |
| 10 | 2 | 73.9 | 1.9 | 20.3 | 0.7 | 3.1 | 0.05 |
| 50 | 11 | 82.2 | 1.7 | 15.4 | 0.6 | 0.0 | 0.05 |
| 100 | 23 | 81.7 | 1.6 | 16.4 | 0.3 | 0.0 | 0.02 |
| 250 | 57 | 83.0 | 1.6 | 15.3 | 0.1 | 0.0 | 0.01 |
| 500 | 114 | 83.9 | 1.7 | 14.4 | 0.0 | 0.0 | 0.00 |
| 750 | 171 | 83.3 | 1.8 | 15.0 | 0.0 | 0.0 | 0.00 |
| 1000 | 229 | 83.1 | 1.5 | 15.4 | 0.0 | 0.0 | 0.00 |
| 1500 | 343 | 83.7 | 1.6 | 14.7 | 0.0 | 0.0 | 0.00 |
| 2000 | 457 | 74.5 | 0.8 | 18.8 | 0.0 | 5.9 | 0.00 |

### [Table 4]

**Table 4**

| Etching time [sec] | Depth [nm] | C | N | O | S | Others |
|---|---|---|---|---|---|---|
| 0 | 0 | 67.1 | 0.0 | 18.4 | 13.1 | 1.5 |
| 10 | 1 | 74.6 | 0.0 | 11.4 | 13.6 | 0.4 |
| 50 | 6 | 76.1 | 0.0 | 11.2 | 12.7 | 0.0 |
| 100 | 11 | 75.2 | 0.0 | 10.1 | 14.7 | 0.0 |
| 250 | 28 | 75.8 | 0.0 | 10.8 | 13.5 | 0.0 |
| 500 | 56 | 77.0 | 0.0 | 10.0 | 13.0 | 0.0 |
| 750 | 84 | 77.9 | 0.0 | 9.8 | 12.2 | 0.0 |
| 1000 | 112 | 76.6 | 0.0 | 9.5 | 13.9 | 0.0 |
| 1500 | 168 | 77.6 | 0.0 | 9.7 | 12.8 | 0.0 |
| 2000 | 224 | 77.6 | 0.0 | 9.6 | 12.9 | 0.0 |
| 2500 | 280 | 78.3 | 0.0 | 9.5 | 12.2 | 0.0 |
| 3000 | 336 | 78.2 | 0.0 | 9.3 | 12.5 | 0.0 |
| 3500 | 392 | 78.1 | 0.0 | 9.0 | 12.8 | 0.0 |

### [Table 5]

**Table 5**

| Etching time [sec] | Depth [nm] | C | N | O | S | Others | C_{PR}/C_{QD} |
|---|---|---|---|---|---|---|---|
| 0 | 0 | 69.3 | 0.9 | 23.3 | 1.0 | 5.5 | 0.07 |
| 10 | 2 | 79.6 | 2.0 | 16.5 | 0.6 | 1.4 | 0.04 |
| 50 | 11 | 80.8 | 1.9 | 16.0 | 0.6 | 0.9 | 0.04 |
| 100 | 23 | 83.1 | 1.8 | 14.6 | 0.5 | 0.0 | 0.03 |
| 250 | 57 | 82.5 | 1.7 | 15.7 | 0.2 | 0.0 | 0.01 |
| 500 | 114 | 82.3 | 1.8 | 15.8 | 0.1 | 0.0 | 0.00 |
| 750 | 171 | 84.5 | 1.7 | 13.9 | 0.0 | 0.0 | 0.00 |
| 1000 | 229 | 84.4 | 1.7 | 13.9 | 0.0 | 0.0 | 0.00 |
| 1500 | 343 | 84.2 | 1.7 | 14.1 | 0.0 | 0.0 | 0.00 |
| 2000 | 457 | 75.9 | 0.8 | 18.1 | 0.0 | 5.2 | 0.00 |

### [Table 6]

**Table 6**

| Etching time [sec] | Depth [nm] | C | N | O | S | Others |
|---|---|---|---|---|---|---|
| 0 | 0 | 62.4 | 0.0 | 23.4 | 13.4 | 0.8 |
| 10 | 1 | 71.7 | 0.0 | 12.3 | 14.2 | 1.8 |
| 50 | 6 | 75.4 | 0.0 | 11.5 | 13.1 | 0.0 |
| 100 | 11 | 75.4 | 0.0 | 10.5 | 14.0 | 0.0 |
| 250 | 28 | 77.1 | 0.0 | 9.9 | 13.0 | 0.0 |
| 500 | 56 | 76.8 | 0.0 | 9.8 | 13.4 | 0.0 |
| 750 | 84 | 77.1 | 0.0 | 9.9 | 13.0 | 0.0 |
| 1000 | 112 | 78.1 | 0.0 | 9.3 | 12.7 | 0.0 |
| 1500 | 168 | 77.8 | 0.0 | 9.4 | 12.8 | 0.0 |
| 2000 | 224 | 77.3 | 0.0 | 10.0 | 12.7 | 0.0 |
| 2500 | 280 | 77.6 | 0.0 | 9.7 | 12.7 | 0.0 |
| 3000 | 336 | 77.3 | 0.0 | 9.8 | 13.0 | 0.0 |
| 3500 | 392 | 77.9 | 0.0 | 8.8 | 13.3 | 0.0 |

### [Table 7]

**Table 7**

| Etching time [sec] | Depth [nm] | C | N | O | S | Others | C_{PR}/C_{QD} |
|---|---|---|---|---|---|---|---|
| 0 | 0 | 67.7 | 2.5 | 27.5 | 2.4 | 0.0 | 0.18 |
| 10 | 1 | 71.8 | 4.0 | 20.8 | 3.4 | 0.0 | 0.26 |
| 50 | 5 | 76.6 | 4.2 | 15.6 | 3.6 | 0.0 | 0.27 |
| 100 | 11 | 78.8 | 3.4 | 14.1 | 3.8 | 0.0 | 0.29 |
| 250 | 27 | 78.9 | 3.9 | 13.3 | 3.8 | 0.0 | 0.29 |
| 500 | 55 | 81.0 | 3.4 | 12.4 | 3.2 | 0.0 | 0.24 |
| 750 | 82 | 81.1 | 3.1 | 12.1 | 3.7 | 0.0 | 0.29 |
| 1000 | 109 | 80.2 | 3.1 | 11.1 | 4.5 | 1.3 | 0.34 |
| 1500 | 164 | 80.2 | 3.2 | 11.1 | 3.9 | 1.7 | 0.30 |
| 2000 | 218 | 80.1 | 2.9 | 11.6 | 3.7 | 1.8 | 0.28 |
| 2500 | 273 | 75.5 | 3.4 | 13.0 | 3.2 | 4.9 | 0.24 |
| 3000 | 327 | 65.3 | 2.4 | 19.1 | 2.4 | 10.9 | 0.18 |
| 3500 | 382 | 53.7 | 1.7 | 25.4 | 1.7 | 17.5 | 0.13 |

### [Table 8]

**Table 8**

| Etching time [sec] | Depth [nm] | C | N | O | S | Others |
|---|---|---|---|---|---|---|
| 0 | 0 | 56.3 | 0.0 | 29.2 | 13.9 | 0.6 |
| 10 | 1 | 60.0 | 0.0 | 25.0 | 15.0 | 0.0 |
| 50 | 6 | 66.6 | 0.0 | 19.0 | 14.5 | 0.0 |
| 100 | 11 | 71.3 | 0.0 | 15.2 | 13.5 | 0.0 |
| 250 | 28 | 74.6 | 0.0 | 12.6 | 12.7 | 0.0 |
| 500 | 56 | 76.4 | 0.0 | 10.9 | 12.8 | 0.0 |
| 750 | 84 | 77.1 | 0.0 | 10.9 | 12.0 | 0.0 |
| 1000 | 112 | 76.8 | 0.0 | 10.2 | 13.1 | 0.0 |
| 1500 | 168 | 78.2 | 0.0 | 9.1 | 12.7 | 0.0 |
| 2000 | 224 | 77.6 | 0.0 | 10.0 | 12.4 | 0.0 |
| 2500 | 280 | 77.3 | 0.0 | 10.1 | 12.6 | 0.0 |
| 3000 | 336 | 78.9 | 0.0 | 9.3 | 11.8 | 0.0 |
| 3500 | 392 | 78.2 | 0.0 | 9.3 | 12.5 | 0.0 |

With reference to Tables 2, 4, 6, and 8, the proportion of sulfur was substantially constant within a range from 0 nm to 392 nm in depth. The phosphor layer had a thickness of 100 µm, and since the proportion of sulfur did not largely change within the range from 0 nm to 392 nm in depth, it can be said that the proportion of sulfur was substantially constant over the entirety of the phosphor layer. Thus, in the present Examples, an average value of the proportions of sulfur in each of Table 2 (Example 1), Table 4 (Example 2), Table 6 (Example 3), and Table 8 (Comparative Example 1) was calculated from 0 nm to 392 nm in depth (the etching time from 0 seconds to 3500 seconds), and this average value was regarded as the proportion of sulfur (C_{QD}) in the phosphor layer.

Tables 1, 3, 5, and 7 show a ratio of the proportion of sulfur in the primer layer at each etching time relative to the average value C_{QD} of the proportion of sulfur in the phosphor layer as C_{PR}/C_{QD}. In Tables 1 and 3, C_{PR}/C_{QD} is shown to two decimal places.

Note that phosphorus (P) was not detected in all Examples and Comparative Example.

In Table 1, the proportions of carbon (C), oxygen (O), and others (including silicon (Si)) largely changed between a measurement point at 1500 seconds and a measurement point at 2000 seconds of the etching time. From this result, the midpoint etching time, 1750 seconds, was regarded as the inflection point. The film thickness of the primer layer (400 nm) was divided by the etching time at the inflection point to calculate the etching rate. This etching rate was used to convert the etching time into the depth. Therefore, in Table 1 (Example 1), the thickness from 0 nm to 343 nm in thickness was the data of the primer layer.

In Table 3 (Example 2), the proportions largely changed between a measurement point at 1500 seconds and a measurement point at 2000 seconds of the etching time. From this result, the midpoint etching time, 1750 seconds, was regarded as the inflection point, and the etching time was converted into the depth in the same manner as in Example 1. In Example 2, the thickness from 0 nm to 343 nm in thickness was the data of the primer layer.

In Table 5 (Example 3), the proportions largely changed between a measurement point at 1500 seconds and a measurement point at 2000 seconds of the etching time. From this result, the midpoint etching time, 1750 seconds, was regarded as the inflection point, and the etching time was converted into the depth in the same manner as in Example 1. In Example 3, the thickness from 0 nm to 343 nm in thickness was the data of the primer layer.

In Table 7, the proportions of carbon (C), oxygen (O), and others (including silicon (Si)) largely changed between a measurement point at 2500 seconds and a measurement point at 3000 seconds of the etching time. From this result, the midpoint etching time, 2750 seconds, was regarded as the inflection point. The film thickness of the primer layer (300 nm) was divided by the etching time at the inflection point to calculate the etching rate. This etching rate was used to convert the etching time into the depth. Therefore, in Table 7 (Comparative Example 1), the thickness from 0 nm to 273 nm in thickness was the data of the primer layer.

In Tables 1, 3, and 5, the data of the etching time of 0 to 1500 seconds, which corresponded to the primer layer, were used to calculate the average value and the standard deviation of the proportions of sulfur. In Table 7, the data of the etching time of 0 to 2500 seconds, which corresponded to the primer layer, were used to calculate the average value and the standard deviation of the proportions of sulfur. From the obtained average value and standard deviation, the coefficient of variation of the proportions of sulfur in the primer layer was determined. In Tables 2, 4, 6, and 8, the data of the etching time of 0 to 3500 seconds were used to calculate the average value and the standard deviation of the proportions of sulfur. From the obtained average value and standard deviation, the coefficient of variation of the proportions of sulfur in the phosphor layer was determined. Table 9 shows the average value, the standard deviation, and the coefficient of variation of the proportions of sulfur in Example 1. Table 10 shows the average value, the standard deviation, and the coefficient of variation of the proportions of sulfur in Example 2. Table 11 shows the average value, the standard deviation, and the coefficient of variation of the proportions of sulfur in Example 3. Table 12 shows the average value, the standard deviation, and the coefficient of variation of the proportions of sulfur in Comparative Example 1. Each of the average value, the standard deviation, and the coefficient of variation is shown to two decimal places.

### [Table 9]

**Table 9**

| | Standard deviation | Average | Coefficient of variation |
|---|---|---|---|
| Primer layer | 0.33 | 0.28 | 1.18 |
| Phosphor layer | 0.80 | 13.08 | 0.06 |

### [Table 10]

**Table 10**

| | Standard deviation | Average | Coefficient of variation |
|---|---|---|---|
| Primer laver | 0.32 | 0.28 | 1.13 |
| Phosphor layer | 0.68 | 13.08 | 0.05 |

### [Table 11]

**Table 11**

| | Standard deviation | Average | Coefficient of variation |
|---|---|---|---|
| Primer laver | 0.32 | 0.31 | 1.05 |
| Phosphor layer | 0.48 | 13.17 | 0.04 |

### [Table 12]

**Table 12**

| | Standard deviation | Average | Coefficient of variation |
|---|---|---|---|
| Primer layer | 0.51 | 3.55 | 0.14 |
| Phosphor layer | 0.90 | 13.04 | 0.07 |

As for the wavelength conversion sheets of Examples 1 to 3 and Comparative Example 1, Table 13 shows initial peeling strength (the result of initial close adhesion) and peeling strength after the long-term environment test (the result of temporal close adhesion).

### [Table 13]

**Table 13**

| | Peeling strength (N) | |
|---|---|---|
| | Initial | After long-term environment test |
| Example 1 | 5.0 | 3.5 |
| Example 2 | 5.0 | 3.8 |
| Example 3 | 5.0 | 3.7 |
| Comparative Example 1 | 5.0 | 1.8 |

With reference to Table 1, the primer layer of Example 1 had a low proportion of sulfur even at 0 nm in depth (the interface between the peeling surface and the phosphor layer), and tendency of drastic decrease in the proportion of sulfur deeper than 23 nm was found.

In the primer layer of Example 1, C_{PR}/C_{QD} at 23 nm in depth was 0.01. C_{PR}/C_{QD} at 2 nm and 11 nm in depth were 0.06 and 0.05, respectively. Within a range equal to or deeper than 171 nm (a region close to the barrier layer), sulfur was not detected. From this result, it can be understood that permeation of the component in the phosphor layer into the primer layer is suppressed in the wavelength conversion sheet of Example 1.

With reference to Table 3, the primer layer of Example 2 also had a low proportion of sulfur even at 0 nm in depth, and tendency of drastic decrease in the proportion of sulfur deeper than 23 nm was found.

In the primer layer of Example 2, C_{PR}/C_{QD} at 23 nm in depth was 0.02. C_{PR}/C_{QD} at 2 nm and 12 nm in depth were both 0.05. Within a range equal to or deeper than 115 nm, sulfur was not detected. From this result, it can be understood that permeation of the component in the phosphor layer into the primer layer is suppressed in the wavelength conversion sheet of Example 2.

With reference to Table 5, the primer layer of Example 3 also had a low proportion of sulfur even at 0 nm in depth, and tendency of drastic decrease in the proportion of sulfur deeper than 23 nm was found.

In the primer layer of Example 3, C_{PR}/C_{QD} at 23 nm in depth was 0.03. C_{PR}/C_{QD} at 2 nm and 11 nm in depth were both 0.04. Within a range equal to or deeper than 170 nm, sulfur was not detected. From this result, it can be understood that permeation of the component in the phosphor layer into the primer layer is suppressed in the wavelength conversion sheet of Example 3.

With reference to Table 7, the primer layer of Comparative Example 1 had a high proportion of sulfur in not only the vicinity of the interface with the phosphor layer but also over the inside.

As shown in Table 7, C_{PR}/C_{QD} at 27 nm in depth was as high as 0.29. The values of C_{PR}/C_{QD} between from 55 nm to 273 nm in depth, which was the region close to the barrier layer, were high.

From this result, it can be understood that the component in the phosphor layer is permeated into the inside of the primer layer at a high concentration in the wavelength conversion sheet of Comparative Example 1.

With reference to Table 12, the coefficient of variation of the proportions of sulfur in the primer layer of Comparative Example 1 was close to the value of the coefficient of variation of the proportions of sulfur in the phosphor layer. From this result, it can be understood that variation of the proportions of sulfur in the thickness direction of the primer layer was small in Comparative Example 1. In contrast, Examples 1 to 3 shown in Tables 9 to 11 exhibited the coefficient of variation of the proportions of sulfur in the phosphor layer equivalent to that in Comparative Example 1, but exhibited an extremely high coefficient of variation of the proportions of sulfur in the primer layer. Also from the coefficient of variation of the proportions of sulfur in the thickness direction of the primer layer, it can be understood that permeation of the component in the phosphor layer into the primer layer is suppressed in all Examples.

With reference to Table 13, all the wavelength conversion sheets of Examples and Comparative Example exhibited the initial peeling strength of 5.0 N. However, the wavelength conversion sheet of Comparative Example 1 exhibited considerably deteriorated close adhesion after the long-term environment test compared with the wavelength conversion sheets of Examples 1 to 3.

From the above results, it can be understood that degradation after the long-term environment test is suppressed by suppressing permeation of the component in the phosphor layer into the primer layer.

### Reference Signs List

10 (10a, 10b): Film for wavelength conversion sheet
20: Base material layer
20-1: First base material
20-2: Second base material
22: Adhesive layer
30: Primer layer
40: Barrier layer
42: First barrier layer
44: Second barrier layer
50: Diffusion layer
60: Phosphor layer
100: Wavelength conversion sheet
110: Light source
120: Optical plate
121: Light guide plate
122: Diffusing plate
130: Reflector
140: Prism sheet
200: Backlight
201: Edge-lit type backlight
202: Direct-lit type backlight

## Claims

1. A wavelength conversion sheet, comprising: a phosphor layer comprising a phosphor; and a film for a wavelength conversion sheet provided on at least one surface side of the phosphor layer, wherein
the film for a wavelength conversion sheet comprises at least a base material layer and a primer layer laminated thereon, and the primer layer is in contact with the phosphor layer,
the phosphor layer and the primer layer comprise an element X, and
C_{PR}/C_{QD} satisfies 0.10 or less, where C_{QD} (atomic%) is an average value of proportions of the element X in the phosphor layer within a region from an interface between the primer layer and the phosphor layer to 400 nm in a thickness direction of the phosphor layer, obtained by X-ray photoelectron spectroscopy, and where C_{PR} (atomic%) is a proportion of the element X in the primer layer at any depth within a region between 20 nm or more and 40 nm or less from the interface in a thickness direction of the primer layer, obtained by X-ray photoelectron spectroscopy.

2. The wavelength conversion sheet according to claim 1, wherein the element X is at least one selected from sulfur and phosphorus.

3. The wavelength conversion sheet according to claim 1 or 2, wherein the element X is sulfur.

4. The wavelength conversion sheet according to claim 1 or 2, wherein a coefficient of variation of the proportions of the element X in the thickness direction of the primer layer obtained by X-ray photoelectron spectroscopy is 0.60 or more.

5. The wavelength conversion sheet according to claim 1 or 2, wherein the primer layer comprises a polyurethane-based resin and a polyester resin.

6. The wavelength conversion sheet according to claim 5, wherein the polyurethane-based resin is a resin obtained by a reaction between a polyfunctional isocyanate having a (meth)acryl group and a hydroxyl group-containing compound.

7. The wavelength conversion sheet according to claim 6, wherein the polyurethane-based resin has a mole ratio of isocyanate groups to hydroxyl groups (NCO/OH ratio) of 1.1 or more.

8. The wavelength conversion sheet according to claim 5, wherein the primer layer further comprises a phenol-based oxidation inhibitor.

9. The wavelength conversion sheet according to claim 1 or 2, further comprising a barrier layer between the base material layer and the primer layer.

10. The wavelength conversion sheet according to claim 9, wherein the barrier layer comprises a first barrier layer and a second barrier layer, and the first barrier layer is an inorganic oxide layer.

11. The wavelength conversion sheet according to claim 9, wherein
the base material layer comprises a first base material and a second base material,
the barrier layer and the primer layer are formed on one surface of the first base material, and
the second base material is adhered to the other surface of the first base material via an adhesion layer.

12. The wavelength conversion sheet according to claim 1 or 2, further comprising a diffusion layer.

13. A backlight comprising: at least one light source that emits primary light; an optical plate that is disposed adjacent to the light source and is for light guiding or diffusion; and a wavelength conversion sheet disposed on a light emission side of the optical plate, wherein the wavelength conversion sheet is the wavelength conversion sheet according to claim 1 or 2.

14. A liquid crystal display device comprising: the backlight according to claim 13; and a liquid crystal panel.
